(19) Europäisches Patentamt
European Patent Office
Office européen des brevets

(11) **EP 3 957 696 A1**

(12) # EUROPÄISCHE PATENTANMELDUNG

(43) Veröffentlichungstag:
**23.02.2022 Patentblatt 2022/08**

(21) Anmeldenummer: **21192046.7**

(22) Anmeldetag: **19.08.2021**

(51) Internationale Patentklassifikation (IPC):
***C09J 7/25*** *(2018.01)* ***C09J 7/26*** *(2018.01)*
***C09J 7/38*** *(2018.01)*

(52) Gemeinsame Patentklassifikation (CPC):
**C09J 7/25; C09J 7/26; C09J 7/387;** C09J 2203/37; C09J 2301/308; C09J 2301/412; C09J 2425/00; C09J 2475/006

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.08.2020 DE 102020210503**
**19.08.2020 DE 102020210505**

(71) Anmelder: **tesa SE**
**22848 Norderstedt (DE)**

(72) Erfinder:
- **BLAZEJEWSKI, Anna**
  **22527 Hamburg (DE)**
- **BULDA, Jessica**
  **20255 Hamburg (DE)**
- **BURMEISTER, Axel**
  **22527 Hamburg (DE)**
- **CZERWONATIS, Franziska**
  **21075 Hamburg (DE)**
- **NEUBERT, Ingo**
  **22850 Norderstedt (DE)**

(74) Vertreter: **tesa SE**
**Hugo-Kirchberg-Straße 1**
**22848 Norderstedt (DE)**

(54) **KLEBEBAND MIT POLYURETHANTRÄGER**

(57) Die vorliegende Erfindung betrifft ein Klebeband einer Dicke von 40 bis 300 µm, das sich durch dehnendes Verstrecken im Wesentlichen in der Verklebungsebene rückstands- und zerstörungsfrei wieder ablösen lässt, umfassend mindestens einen Träger einer Dicke von 10 bis 150 µm, der mindestens eine typischerweise mittels Extrusion hergestellte Schicht auf Basis von, vorzugsweise unvernetztem, thermoplastischem Polyurethan enthält, die eine Shore-Härte A von höchstens 87 aufweist, wobei der Träger ein Verhältnis der Kraft bei 400% Dehnung $F_{400\%}$ zur Bruchkraft $F_{Bruch}$ von höchstens 45% aufweist, wobei auf dem Träger mindestens einseitig eine Haftklebemasseschicht angeordnet ist, und wobei das Klebeband ein Verhältnis von Strippkraft $F_{Stripp}$ zu Bruchkraft $F_{Bruch}$ von weniger als 60 % aufweist. Außerdem betrifft die Erfindung ein Klebeband einer Dicke von 40 bis 300 µm, das sich durch dehnendes Verstrecken im Wesentlichen in der Verklebungsebene rückstands- und zerstörungsfrei wieder ablösen lässt, umfassend mindestens einen Träger einer Dicke von 10 bis 150 µm, der mindestens eine Schicht auf Basis von, vorzugsweise unvernetztem, Polyurethan enthält, die aus einer Dispersion hergestellt worden ist und ein Modul bei 100% Dehnung von höchstens 1,8 MPa aufweist, wobei der Träger ein Verhältnis der Kraft bei 400% Dehnung $F_{400\%}$ zur Bruchkraft $F_{Bruch}$ von höchstens 30% aufweist, wobei auf dem Träger mindestens einseitig eine Haftklebemasseschicht angeordnet ist, und wobei das Klebeband ein Verhältnis von Strippkraft $F_{Stripp}$ zu Bruchkraft $F_{Bruch}$ von weniger als 60 % aufweist. Die Erfindung betrifft außerdem ein Verfahren zur Herstellung der Klebebänder sowie deren Verwendung zur Verklebung von Bauteilen in elektronischen Geräten.

Figur 1:

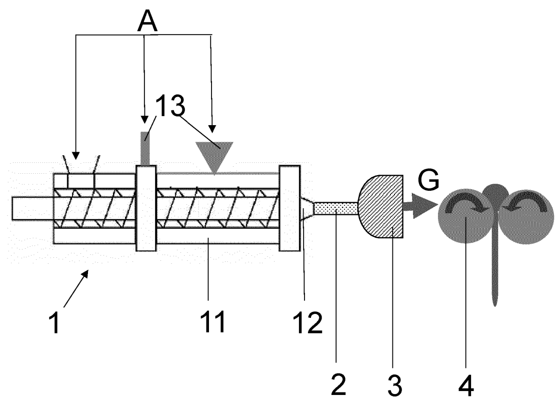


EP 3 957 696 A1

## Beschreibung

## Klebeband mit Polyurethanträger

Die vorliegende Erfindung betrifft Klebebänder, die einen Träger auf Polyurethanbasis enthalten, ein Verfahren zur Herstellung der Klebebänder sowie deren Verwendung zur Verklebung von Bauteilen in elektronischen Geräten.

DE 10 2012 223 670 A1 beschreibt einen Haftklebfolienstreifen aus mindestens zwei, insbesondere drei Schichten, der sich durch dehnendes Verstrecken im Wesentlichen in der Verklebungsebene rückstands- und zerstörungsfrei wieder ablösen lässt, mit einem Träger, auf dem zumindest einseitig eine erste, außenliegende Klebemassenschicht vorhanden ist, wobei die Klebemassenschicht aus einer Klebmasse besteht, die auf Basis von Vinylaromatenblockcopolymeren und Klebharzen aufgebaut ist, wobei zu mindestens 75 % (bezogen auf den Gesamtharzanteil) ein Harz gewählt wird mit einem DACP (diacetone alcohol cloud point) von größer -20 °C, bevorzugt größer 0 °C, und der Träger mindestens eine Schicht aufweist, die aus einem Polyurethan besteht mit einer Reißdehnung von mindestens 100 % und einem Rückstellvermögen von über 50 %.

DE 10 2015 206 076 A1 beschreibt einen Haftklebstreifen, der sich durch dehnendes Verstrecken im Wesentlichen in der Verklebungsebene rückstands- und zerstörungsfrei wieder ablösen lässt, aus einer oder mehreren Klebemassenschichten, die allesamt aus einer Haftklebemasse bestehen, die mit Mikroballons geschäumt ist, und gegebenenfalls aus einer oder mehreren Zwischenträgerschichten, dadurch gekennzeichnet, dass der Haftklebestreifen ausschließlich aus den genannten Klebemassenschichten und gegebenenfalls vorhandenen Zwischenträgerschichten besteht und die eine äußere obere und eine äußere untere Fläche des Haftklebestreifens von der oder den genannten Klebemassenschichten gebildet werden.

EP 30 75 772 A1 beschreibt einen Haftklebstreifen, der sich durch dehnendes Verstrecken im Wesentlichen in der Verklebungsebene rückstands- und zerstörungsfrei wieder ablösen lässt, umfassend eine Klebemassenschicht, wobei die Klebemassenschicht aus einer Haftklebemasse besteht, die auf Basis von Vinylaromatenblockcopolymeren und Klebharzen aufgebaut ist, wobei zu mindestens 75 Gew.-% (bezogen auf den Gesamtharzanteil) ein Harz gewählt wird mit einem DACP (diacetone alcohol cloud point) von größer -20 °C, bevorzugt größer 0 °C, und einer Erweichungstemperatur (Ring & Ball) von größer gleich 70 °C, vorzugsweise größer gleich 100 °C, und wobei die Haftklebemasse geschäumt ist.

DE 10 2016 224 646 A1 beschreibt einen Haftklebestreifen, der zumindest eine Schicht SK1, vorzugsweise genau eine Schicht SK1, aus einer selbstklebenden Masse umfasst, die auf einer mit Mikroballons geschäumten Vinylaromatenblockcopolymer-Masse basiert, wobei der mittlere Durchmesser der von den Mikroballons gebildeten Hohlräume in der Selbstklebemasseschicht SK1 45 bis 110 μm beträgt.

KR 101680827 B1 beschreibt ein Verfahren zur Herstellung einer schockresistenten Schaumstruktur, umfassend die Schritte:
Herstellen einer Schaumzusammensetzung, in der vorexpandierte Teilchen und eine Bindemittelzusammensetzung gemischt werden, Aufbringen der Schaumzusammensetzung auf ein Substrat, Durchführen einer vorläufigen Wärmebehandlung an der aufgebrachten Schaumzusammensetzung, um einen Vorschaum zu bilden, und Umwandeln des Vorschaums durch Wärmebehandlung in eine hitzebeständige Schaumstruktur aus schockresistenten Partikeln, wobei die vorexpandierten Partikel expandiert werden.

US 2017121573 A1 beschreibt eine Klebstoffformulierung, umfassend 50 bis 99% Klebstoffkomponente, 0 bis 3% Vernetzer 0 bis 3% Antioxidans und 0,1 bis 10% expandierbare Mikrokugeln, die in der Formulierung verteilt sind.

EP 3623400 A1 beschreibt einen Polyurethanschaum, erhältlich durch mechanisches Schäumen eines Ausgangsgemisches aus einer Polyurethan-Dispersion, wobei das Polyurethan aus mindestens einer Polyisocyanatkomponente und mindestens einer Polyolkomponente zusammengesetzt ist, und mindestens eines Tensids, dadurch gekennzeichnet, dass die Polyolkomponente oder mindestens eine der Polyolkomponenten mindestens ein Comonomer mit Flammschutzwirkung enthaltend zwei Hydroxygruppen aufweist.

WO 2015135134 A1 beschreibt ein durch dehnendes Verstrecken ablösbares Klebeband, umfassend einen Träger mit einer ersten Oberfläche und einer zweiten Oberfläche, wobei der Träger aus vernetztem thermoplastischem Polyurethan hergestellt ist, und Haftklebstoff, der auf mindestens einer der ersten und zweiten Oberflächen angeordnet ist, wobei der Haftklebstoff aus einem Acrylcopolymer gebildet ist, das ein Polyurethan mit endständiger funktioneller Gruppe umfasst, wobei das Klebeband eine Dicke im Bereich zwischen 0,05 und 0,10 mm und eine Dehnbarkeit in Längsrichtung zwischen 850% und 2200% aufweist, wobei das Klebeband fest mit einem Substrat verbunden werden kann und danach von diesem entfernt werden kann, nachdem es in einem Winkel von 90 ° oder mehr Grad von der Oberfläche des Substrats gestreckt wurde, ohne dass der Träger vor dem Entfernen des Klebebandes vom Substrat bricht und ohne wesentliche Rückstände des Haftklebstoffs auf dem Substrat zu hinterlassen.

WO 2020035761 A1 beschreibt einen Oberflächenfilm enthaltend eine Basisschicht, wobei die Basisschicht einen thermoplastischen Polyurethanfilm umfasst, der ein Reaktionsprodukt eines Reaktionsgemisches enthält, das ein Diisocyanat, ein Polyesterpolyol mit einer Schmelztemperatur von mindestens etwa 30 ° C und einen Diolkettenverlängerer enthält.

Ausgehend vom Stand der Technik besteht somit die Aufgabe, die der vorliegenden Erfindung zugrunde liegt, insbesondere darin, ein Klebeband bereitzustellen, das durch dehnendes Verstrecken bequem wieder ablösbar ist, eine hohe Reißerbeständigkeit aufweist und eine hohe Schockresistenz besitzt.

Die Aufgabe wird zum einen durch ein Klebeband nach Anspruch 1 gelöst. Anspruch 1 betrifft ein Klebeband einer Dicke von 40 bis 300 µm, das sich durch dehnendes Verstrecken im Wesentlichen in der Verklebungsebene rückstands- und zerstörungsfrei wieder ablösen lässt, umfassend

mindestens einen, typischerweise genau einen, Träger einer Dicke von 10 bis 150 µm, der mindestens eine Schicht auf Basis von, vorzugsweise unvernetztem, thermoplastischem Polyurethan enthält, die eine Shore-Härte A von höchstens 87, vorzugsweise höchstens 85 und insbesondere weniger als 70 aufweist, wobei der Träger ein Verhältnis der Kraft bei 400% Dehnung $F_{400\%}$ zur Bruchkraft $F_{Bruch}$ von höchstens 45%, vorzugsweise höchstens 40% aufweist, auf dem mindestens einseitig, vorzugsweise beidseitig, eine Haftklebemasseschicht angeordnet ist,

wobei das Klebeband ein Verhältnis von Strippkraft $F_{Stripp}$ zu Bruchkraft $F_{Bruch}$ von weniger als 60 %, vorzugsweise weniger als 50 % aufweist. Das Klebeband kann daher ein einseitiges Klebeband oder ein doppelseitiges Klebeband sein, vorzugsweise ist es doppelseitig.

Typischerweise ist im Träger die mindestens eine Schicht auf Basis von, vorzugsweise unvernetztem, thermoplastischem Polyurethan mittels Extrusion hergestellt worden. Außerdem weist der Träger vorzugsweise eine Kraft bei 400% Dehnung $F_{400\%}$ von höchstens 15 N/mm$^2$ auf.

Im Klebeband nach Anspruch 1 kann das gewünschte Verhältnis von $F_{400\%}$ zu $F_{Bruch}$ des Trägers beispielsweise dadurch erreicht werden, dass (i) im Träger, jeweils bezogen auf die gesamte Masse des Trägers, vorzugsweise (insgesamt) weniger als 0,3 Gew.-%, bevorzugter weniger als 0,1 Gew.-% Prozesshilfsmittel wie Wachse, Gleitmittel und/oder Antiblockmittel (zum Beispiel $SiO_2$-Partikel) eingesetzt werden, wobei der Träger besonders bevorzugt frei von Prozesshilfsmitteln ist, und dass (ii) im Träger vorzugsweise keine kristallinen Überstrukturen vorhanden sind. Mit den vorstehenden Gewichtsanteilen Prozesshilfsmittel ist jeweils die Gesamtmenge an Prozesshilfsmittel im Träger gemeint, bezogen auf die gesamte Masse des Trägers. In einer weiteren bevorzugten Ausführungsform sind im Träger weniger als 0,1 Gew.-% Wachse, weniger als 0,1 Gew.-% Gleitmittel und/oder weniger als 0,1 Gew.-% Antiblockmittel enthalten, jeweils bezogen auf die gesamte Masse des Trägers. Alterungsschutzmittel gelten gemäß der vorliegenden Anmeldung nicht als Prozesshilfsmittel. Eine geringe Strippkraft bei gleichzeitig hoher Reißerbeständigkeit und guten Schock-Eigenschaften des Klebebands können vor allem durch eine Shore-Härte A der mindestens einen Schicht auf Basis von, vorzugsweise unvernetztem, thermoplastischem Polyurethan von höchstens 87, ein Verhältnis von $F_{400\%}$ zu $F_{Bruch}$ des Trägers von höchstens 45% und eine geeignete Auswahl der Trägerdicke (10 bis 150 µm) und der Klebmasse erzielt werden.

Die Erfindung betrifft ebenso ein Verfahren zur Herstellung eines Klebebands gemäß Anspruch 1, bei dem ein Träger, der wie in Anspruch 1 definiert ist,

(i) auf einen temporären Träger extrudiert wird und mindestens einseitig, vorzugsweise beidseitig, mit einer Haftklebemasse kombiniert wird, oder

(ii) auf eine Haftklebemasseschicht extrudiert wird, wobei vorzugsweise der Träger auf der der Haftklebemasseschicht gegenüber liegenden Seite mit einer weiteren Haftklebemasse kombiniert wird,

so dass sich ein Klebeband ergibt.

Die Aufgabe, die der vorliegenden Erfindung zugrunde liegt, kann alternativ auch durch ein Klebeband nach Anspruch 4 gelöst werden. Anspruch 4 betrifft ein Klebeband einer Dicke von 40 bis 300 µm, das sich durch dehnendes Verstrecken im Wesentlichen in der Verklebungsebene rückstands- und zerstörungsfrei wieder ablösen lässt, umfassend

mindestens einen, typischerweise genau einen, Träger einer Dicke von 10 bis 150 µm, der mindestens eine Schicht auf Basis von, vorzugsweise unvernetztem, Polyurethan enthält, die aus einer, vorzugsweise anionisch stabilisierten, Dispersion hergestellt worden ist und ein Modul bei 100% Dehnung von höchstens 1,8 MPa, vorzugsweise höchstens 1,5 MPa, aufweist, wobei der Träger ein Verhältnis der Kraft bei 400% Dehnung $F_{400\%}$ zur Bruchkraft $F_{Bruch}$ von höchstens 30%, vorzugsweise höchstens 20%, aufweist,

auf dem mindestens einseitig, vorzugsweise beidseitig, eine Haftklebemasseschicht angeordnet ist,

wobei das Klebeband ein Verhältnis von Strippkraft $F_{Stripp}$ zu Bruchkraft $F_{Bruch}$ von weniger als 60 %, vorzugsweise

weniger als 50 % aufweist. Das Klebeband kann daher ein einseitiges Klebeband oder ein doppelseitiges Klebeband sein, vorzugsweise ist es doppelseitig. Das Polyurethan ist zudem typischerweise thermoplastisch.

Vorzugsweise weist der Träger eine Kraft bei 400% Dehnung $F_{400\%}$ von höchstens 15 $N/mm^2$ auf.
In einer weiteren bevorzugten Ausführungsform des Klebebands nach Anspruch 4 sind im Träger weniger als 0,1 Gew.-% Wachse, weniger als 0,1 Gew.-% Gleitmittel und/oder weniger als 0,1 Gew.-% Antiblockmittel enthalten, jeweils bezogen auf die gesamte Masse des Trägers. Eine geringe Strippkraft bei gleichzeitig hoher Reißerbeständigkeit und guten Schock-Eigenschaften des Klebebands können vor allem durch ein Modul bei 100% Dehnung der mindestens einen Schicht auf Basis von, vorzugsweise unvernetztem, Polyurethan von höchstens 1,8 MPa, ein Verhältnis von $F_{400\%}$ zu $F_{Bruch}$ des Trägers von höchstens 30% und eine geeignete Auswahl der Trägerdicke (10 bis 150 $\mu$m) und der Klebmasse erzielt werden. Trägerschichten auf Basis von, vorzugsweise unvernetztem, Polyurethan, die aus einer Dispersion hergestellt worden sind, führen zu besonders geringen Strippkräften.
Die Erfindung betrifft ebenso ein Verfahren zur Herstellung eines Klebebands gemäß Anspruch 4, bei dem eine Dispersion auf Basis von, vorzugsweise unvernetztem, Polyurethan

(i) auf einen temporären Träger beschichtet und getrocknet wird und der sich ergebende wie in Anspruch 4 definierte Träger mindestens einseitig, vorzugsweise beidseitig, mit einer Haftklebemasse kombiniert wird, oder

(ii) auf eine Haftklebemasseschicht beschichtet und getrocknet wird, so dass sich ein Träger ergibt, der wie Anspruch 4 definiert ist, wobei vorzugsweise der Träger auf der der Haftklebemasseschicht gegenüber liegenden Seite mit einer weiteren Haftklebemasse kombiniert wird,

so dass sich ein Klebeband ergibt.
Bevorzugte Ausführungsformen der Klebebänder nach Anspruch 1 bzw. Anspruch 4 und der Verfahren zu deren Herstellung finden sich in den abhängigen Ansprüchen. Die bevorzugten Ausführungsformen der Klebebänder sind zudem auch bevorzugte Ausführungsformen der Verfahren zu deren Herstellung.
Die Erfindung betrifft außerdem die Verwendung eines erfindungsgemäßen Klebebands zur Verklebung von Bauteilen in elektronischen Geräten.
Typische Konfektionierformen der erfindungsgemäßen Klebebänder sind Klebebandrollen - die Klebebänder, insbesondere in Bahnform, können in Form von Rollen, also in Form von archimedischen Spiralen auf sich selbst aufgerollt, hergestellt werden - sowie Klebestreifen, wie sie zum Beispiel in Form von Stanzlingen erhalten werden.
Vorzugsweise weisen alle Schichten im Wesentlichen die Form eines Quaders auf. Weiter vorzugsweise sind alle Schichten vollflächig miteinander verbunden.
Der allgemeine Ausdruck "Klebeband", synonym auch "Klebestreifen" genannt, umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.
Die Klebebänder weisen somit eine Längsausdehnung (x-Richtung) und eine Breitenausdehnung (y-Richtung) auf. Die Klebebänder weisen auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise exakt gleich.
Die erfindungsgemäßen Klebebänder liegen insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleichbleibend ausgebildet ist.
In doppelseitigen Klebebändern sind die beiden Haftklebemasseschichten hinsichtlich ihrer Zusammensetzung vorzugsweise identisch. Alternativ können sie sich hinsichtlich ihrer Zusammensetzung auch unterscheiden. Außerdem weisen in doppelseitigen Klebebändern die beiden Haftklebemasseschichten vorzugsweise die gleiche Dicke auf. Alternativ können sie sich hinsichtlich ihrer Dicke auch unterscheiden.
Vorteilhaft können die äußeren, frei liegenden Flächen der Klebemasseschichten der erfindungsgemäßen Klebebänder mit antiadhäsiven Materialien ausgerüstet sein wie ein Trennpapier oder eine Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.
Da die erfindungsgemäßen Klebebänder Haftklebemassen enthalten, werden die erfindungsgemäßen Klebebänder auch als Haftklebebänder bezeichnet.

Wie beschrieben, lassen sich die erfindungsgemäßen Haftklebebänder durch dehnendes Verstrecken im Wesentlichen in der Verklebungsebene rückstands- und zerstörungsfrei wieder ablösen. Unter "rückstandsfreiem Ablösen" der Klebebänder ist erfindungsgemäß gemeint, dass sie beim Ablösen auf den verklebten Oberflächen der Bauteile keine Klebstoffrückstände hinterlassen. Ferner ist unter "zerstörungsfreiem Ablösen" der Klebebänder erfindungsgemäß gemeint, dass sie beim Ablösen die verklebten Oberflächen der Bauteile nicht beschädigen wie beispielsweise zerstören.

Damit sich Klebebänder durch dehnendes Verstrecken in der Verklebungsebene rückstands- und zerstörungsfrei wieder ablösen lassen, müssen sie bestimmte klebtechnische Eigenschaften besitzen. So muss beim Verstrecken die Klebrigkeit der Klebebänder deutlich sinken. Je niedriger die Klebleistung im verstreckten Zustand ist, umso weniger stark wird der Untergrund beim Ablösen beschädigt oder umso weniger ausgeprägt besteht die Gefahr, dass Rückstände auf dem Verklebungssubstrat zurückbleiben. Besonders deutlich ist diese Eigenschaft bei Haftklebemassen auf Basis von Vinylaromatenblockcopolymeren zu erkennen, bei denen in der Nähe der Streckgrenze die Klebrigkeit auf unter 10 % sinkt.

Damit Klebebänder durch dehnendes Verstrecken leicht und rückstandsfrei wieder abgelöst werden können, müssen sie neben den oben beschriebenen klebtechnischen auch bestimmte mechanische Eigenschaften besitzen. Besonders vorteilhaft ist das Verhältnis der Reißkraft und der Strippkraft größer als zwei, bevorzugt größer als drei. Dabei ist die Strippkraft diejenige Kraft, die aufgewendet werden muss, um ein Klebeband aus einer Klebefuge durch dehnendes Verstrecken in der Verklebungsebene wiederabzulösen. Diese Strippkraft setzt sich aus der Kraft, die wie oben beschrieben für das Ablösen des Klebebands von den Verklebungsuntergründen nötig ist, und der Kraft, die zur Verformung des Klebebands aufgewendet werden muss, zusammen. Die zur Verformung des Klebebands erforderliche Kraft ist abhängig von der Dicke des Klebebands. Die zum Ablösen benötigte Kraft ist dagegen in dem betrachteten Dickenbereich des Klebebands unabhängig von der Dicke des Klebebands.

<u>Erfindungsgemäße Träger:</u>

In den Klebebändern gemäß den Ansprüchen 1 und 4 ist das Polyurethan des Trägers jeweils vorzugsweise unvernetzt. Im Sinne der vorliegenden Anmeldung ist mit unvernetztem Polyurethan ein solches Polyurethan gemeint, das nicht kovalent vernetzt ist, d.h. nicht chemisch vernetzt ist. In einem unvernetzten Polyurethan im Sinne der vorliegenden Anmeldung können allerdings unabhängig davon andere Vernetzungsarten vorliegen, wie zum Beispiel koordinative Vernetzungen, Wasserstoffbrückenbindungen, Verschlaufungen und/oder physikalische Vernetzungen über Kristallite, sofern es sich um ein semikristallines Polyurethan handelt. In einer alternativen Ausführungsform ist im Klebeband gemäß Anspruch 1 bzw. 4 das Polyurethan des Trägers vernetzt, d.h. kovalent vernetzt.

<u>a) Träger auf Basis von thermoplastischem Polyurethan, typischerweise hergestellt mittels Extrusion:</u>

Der mindestens eine Träger des Klebebands nach Anspruch 1 enthält mindestens eine, vorzugsweise genau eine, Schicht auf Basis von, vorzugsweise unvernetztem, thermoplastischem Polyurethan, die typischerweise mittels Extrusion hergestellt worden ist. Mit einer solchen Schicht auf Basis von thermoplastischem Polyurethan ist typischerweise eine Schicht gemeint, deren Anteil an thermoplastischem Polyurethan mindestens 50 Gew.-% beträgt. Vorzugsweise beträgt der Anteil an thermoplastischem Polyurethan in der Schicht mindestens 90 Gew.-%, insbesondere besteht die Schicht im Wesentlichen aus thermoplastischem Polyurethan.

Das, vorzugsweise unvernetzte, thermoplastische Polyurethan der mindestens einen Trägerschicht ist vorzugsweise Polyester-basiert (kann aber alternativ auch Polyether-basiert sein, wie zum Beispiel auf Poly-THF als Polyol basieren). Das thermoplastische Polyurethan auf Polyesterbasis bzw. Polyetherbasis ist typischerweise thermoplastisches Polyurethan auf Basis von aliphatischem Polyester bzw. aliphatischem Polyether. Die Glasübergangstemperatur ($T_g$) der weichen Molekülkette des thermoplastischen Polyurethans liegt vorzugsweise zwischen -20 °C und 40 °C und die Glasübergangstemperatur der harten Molekülkette des thermoplastischen Polyurethans liegt vorzugsweise zwischen 60 bis 110 °C. Das thermoplastische Polyurethan hat typischerweise eine Reißfestigkeit von über 20, vorzugsweise über 35 MPa und die Shore-Härte A beträgt vorzugsweise zwischen 55 und 85, wie insbesondere zwischen 55 und 70. In einer alternativ bevorzugten Ausführungsform beträgt die Shore-Härte zwischen 70 und 85.

Das thermoplastische Polyurethan ist vorzugsweise ein Reaktionsprodukt eines Reaktionsgemisches, das mindestens ein Diisocyanat, mindestens ein Polyesterpolyol (oder Polyetherpolyol) und gegebenenfalls mindestens einen Kettenverlängerer enthält, wobei das Polyesterpolyol (oder Polyetherpolyol) typischerweise eine Schmelztemperatur von mindestens 30 °C hat, wie zum Beispiel mindestens 100 ° C oder mindestens 200 ° C. Die Wahl einer geeigneten Schmelztemperatur kann dazu beitragen, den Kristallinitätsgrad der Schicht zu erhöhen. Der Kristallinitätsgrad kann durch Differentialscanningkalorimetrie (DSC) bestimmt werden und wird als Bruchteil der Kristallinität im thermoplastischen Polyurethanfilm ausgedrückt.

Der Anteil an Diisocyanat in dem Reaktionsgemisch beträgt vorzugsweise 0,5 bis 47 Gew.-%, bevorzugter 1

bis 40 Gew.-% und insbesondere 10 bis 25 Gew.-%. Die Menge des Diisocyanats im Reaktionsgemisch kann auch als Isocyanatindex ausgedrückt werden. Unter einem Isocyanatindex kann allgemein verstanden werden, dass er sich auf das Verhältnis der äquivalenten Menge der verwendeten funktionellen Isocyanatgruppen zur äquivalenten Menge der funktionellen Hydroxygruppen bezieht. Der Isocyanatindex des Reaktionsgemischs liegt vorzugsweise in einem Bereich von 0,99 bis 1,20, wie 1,00 bis 1,10.

Vorzugsweise handelt es sich beim Diisocyanat um ein Diisocyanat mit der Struktur aus Formel I

$$0=C=N-R-N=C=0$$ (Formel I),

worin R ausgewählt ist aus substituiertem oder unsubstituiertem $(C_1-C_{40})$-Alkylen, $(C_2-C_{40})$-Alkenylen, $(C_4-C_{20})$-Arylen, $(C_4-C_{20})$-Arylen-$(C_1-C_{40})$-Alkylen-$(C_4-C_{20})$-Arylen, $(C_4-C_{20})$-Cycloalkylen und $(C_4-C_{20})$-Aralkylen. In weiteren Beispielen wird das Diisocyanat ausgewählt aus Dicyclohexylmethan-4,4'-diisocyanat, Isophorondiisocyanat, Hexamethylendiisocyanat, 1,4-Phenylendiisocyanat, 1,3-Phenylendiisocyanat, m-Xylylendiisocyanat, Toluylen-2,4-diisocyanat, Toluol-2,4-diisocyanat, Toluylen-2,6-diisocyanat, Poly(hexamethylendiisocyanat), 1,4-Cyclohexylendiisocyanat, 4-Chlor-6-methyl-1,3-phenylendiisocyanat, Hexamethylendiisocyanat, Diphenylmethan-4,4'-diisocyanat, 1,4-Diisocyanatobutan, 1,8-Diisocyanatooctan, 2,6-Toluoldiisocyanat, 2,5-Toluoldiisocyanat, 2,4-Toluoldiisocyanat, m-Phenylendiisocyanat, p-Phenylendiisocyanat, Methylenbis(o-chlorphenyldiisocyanat), Methylendiphenylen-4,4'-diisocyanat, (4,4'-Diisocyanato-3,3',5,5'-tetraethyl)diphenylmethan, 4,4'-Diisocyanato-3,3'- Dimethoxy-biphenyl(o-dianisidindiisocyanat), 5-Chlor-2,4-toluoldiisocyanat, 1-Chlormethyl-2,4-diisocyanatobenzol, Tetramethyl-m-xylylendiisocyanat, 1,6-Diisocyanatohexan, 1,12-Diisocyanatododecan, 2-Methyl-1,5-diisocyanatopentan, Methylendicyclohexylen-4,4'-diisocyanat, 3-Isocyanatomethyl-3,5,5-trimethylcyclohexylisocyanat, 2,2,4-Trimethylhexyldiisocyanat oder einer Mischung davon.

Besonders bevorzugt wird als Diisocyanat Diphenylmethan-4,4'-diisocyanat (MDI), Hexandiisocyanat (HDI), Isophorondiisocyanat (IPDI) oder Hexamethylendiisocyanat (HMDI) eingesetzt, wie zum Beispiel MDI. Das Polyisocyanat wie typischerweise Diisocyanat kann also in einer bevorzugten Ausführungsform ein aromatisches Polyisocyanat (Diisocyanat) sein.

Der Anteil an Polyesterpolyol (oder Polyetherpolyol) im Reaktionsgemisch liegt vorzugsweise im Bereich von 43 Gew.-% bis 70 Gew.-%, bevorzugter 50 Gew.-% bis 60 Gew.-%.

Das Polyesterpolyol kann eine beliebige geeignete Anzahl an Hydroxylgruppen enthalten. Beispielsweise kann das Polyesterpolyol vier Hydroxylgruppen oder drei Hydroxylgruppen enthalten. Das Polyesterpolyol kann sogar zwei Hydroxylgruppen enthalten, so dass das Polyesterpolyol ein Polyesterdiol ist. Im Allgemeinen kann das Polyesterpolyol ein Produkt einer Kondensationsreaktion wie einer Polykondensationsreaktion sein. Das Polyesterpolyol wird jedoch typischerweise nicht über ein Ringöffnungspolymerisationsreaktionsprodukt hergestellt.

In Beispielen, in denen Polyesterpolyol gemäß einer Kondensationsreaktion hergestellt wird, kann die Reaktion zwischen einer oder mehreren Carbonsäuren und einem oder mehreren Polyolen stattfinden. Ein Beispiel einer geeigneten Carbonsäure umfasst eine Carbonsäure gemäß Formel II mit der Struktur:

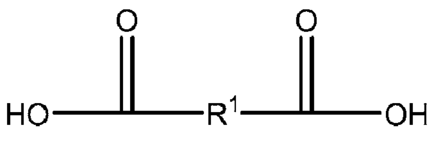
(Formel II)

In der Formel II wird $R^1$ typischerweise ausgewählt aus substituiertem oder unsubstituiertem $(C_1-C_{40})$-Alkylen, $(C_2-C_{40})$-Alkylen, $(C_2-C_{40})$-Alkenylen, $(C_4-C_{20})$-Arylen, $(C_4-C_{20})$-Cycloalkylen und $(C4-C_{20})$- Aralkylen. Beispiele für geeignete Carbonsäuren umfassen Glykolsäure (2-Hydroxyethansäure), Milchsäure (2-Hydroxypropansäure), Bernsteinsäure (Butandisäure), 3-Hydoxybutansäure, 3-Hydroxypentansäure, Terephthalsäure (Benzol-1,4-Dicarbonsäure), Naphthalindicarbonsäure, 4-Hydroxybenzoesäure, 6-Hydroxynaphtalan-2-carbonsäure, Oxalsäure, Malonsäure (Propandisäure), Adipinsäure (Hexandisäure), Pimelsäure (Heptandisäure), Ethonsäure, Suberinsäure (Octandisäure), Azelainsäure (Nonandisäure), Sebacinsäure (Decandisäure), Glutarsäure (Pentandisäure), Dodecandisäure, Brassylsäure, Thapsinsäure, Maleinsäure, Fumarsäure, Glutaconsäure, 2-Decensäure, Muconsäure, Glutinsäure, Citraconsäure, Mesaconsäure, Itaconsäure, Äpfelsäure (2-Hydroxybutandisäure), Asparaginsäure (2-Aminobutandisäure), Glutaminsäure (2-Aminopentandisäure), Weinsäure ( 2,3-Dihydroxybutandisäure), Diaminopimelinsäure, Saccharinsäure,, Mesoxalsäure, Oxalessigsäure, Acetonicarbonsäure (3-Oxopentandisäure), Arabinarinsäure, Phthalsäure, Isophthalsäure, 2,6-Naphtalendicarbonsäure oder eine Mischung davon. Besonders bevorzugt ist Adipinsäure.

Ein Beispiel eines geeigneten Polyols umfasst ein Polyol gemäß Formel III mit der Struktur:

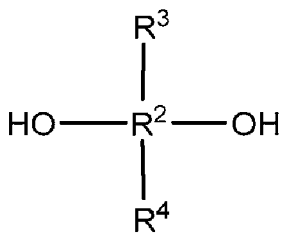

(Formel III)

In der Formel III wird $R^2$ ausgewählt aus substituiertem oder unsubstituiertem ($C_1$-$C_{40}$)-Alkylen, ($C_2$-$C_{40}$)-Alkenylen, ($C_4$-$C_{20}$)-Arylen, ($C_1$-$C_{40}$)-Acylen, ($C_4$-$C_{20}$)-Cycloalkylen, ( $C_4$-$C_{20}$)Aralkylen und ($C_1$-$C_{40}$)-Alkoxylen, und $R^3$ und $R^4$ werden unabhängig voneinander ausgewählt aus -H, -OH, substituiertem oder unsubstituiertem ($C_1$-$C_{40}$)-Alkyl, ($C_2$-$C_{40}$)-Alkenyl, ($C_4$-$C_{20}$)-Aryl, ($C_1$-$C_{20}$)-Acyl, ($C_4$-$C_{20}$)-Cycloalkyl, ($C_4$-$C_{20}$)Aralkyl und ($C_1$-$C_{40}$)-Alkoxy. Besonders bevorzugt wird als Polyol Ethylenglykol, Butandiol, Hexandiol, Neopentylglykol oder eine Mischung davon eingesetzt.

Falls ein Kettenverlängerer eingesetzt wird, liegt er im Reaktionsgemisch vorzugsweise zu 1 bis 13 Gew.-% vor, insbesondere zu 2 bis 10 Gew.-%.

Der Diolkettenverlängerer hat typischerweise ein gewichtsmittleres Molekulargewicht von weniger als etwa 250 Dalton. Beispielsweise kann ein gewichtsmittleres Molekulargewicht des Diolkettenverlängerers in einem Bereich von 30 Dalton bis 250 Dalton liegen, vorzugsweise 50 Dalton bis 150 Dalton. Der Diolkettenverlängerer kann eine beliebige geeignete Anzahl von Kohlenstoffen enthalten. Zum Beispiel kann der Diolkettenverlängerer eine zahlenmittlere Anzahl von 2 Kohlenstoffen bis 20 Kohlenstoffen, vorzugsweise 3 Kohlenstoffen bis 10 Kohlenstoffen aufweisen. Solche Diolkettenverlängerer können zur Stärkung der TPU-basierten Schicht ("PU" bzw. "TPU" bedeuten in der vorliegenden Anmeldung Polyurethan bzw. thermoplastisches Polyurethan) beitragen. Dies kann daran liegen, dass die relativ kurzen Ketten steifer sein können als ein längerkettiges Diol. Die kurzkettigen Diole können beispielsweise steifer sein, weil das kurzkettige Diol hinsichtlich der Rotation um die einzelnen Bindungen entlang der Kette stärker eingeschränkt ist. Beispiele für geeignete Diolkettenverlängerer umfassen Ethylenglykol, Diethylenglykol, Triethylenglykol, Tetraethylenglykol, Propylenglykol, Dipropylenglykol, Tripropylenglykol, 1,3-Propandiol, 1,3-Butandiol, 1,4-Butandiol, Neopentylglykol, 1,6-Hexandiol, 1,4-Cyclohexan-dimethanol oder eine Mischung davon. Besonders bevorzugt wird als Diolkettenverlängerer Butandiol eingesetzt.

Besonders bevorzugte Polyesterpolyole sind entsprechend Polyalkylenadipate.

Die TPU-basierte Trägerschicht ist vorzugsweise frei von Additiven wie Antiblockmitteln und Wachsen. Zudem weist das Polyurethan vorzugsweise keine kristalline Überstruktur auf (eine kristalline Überstruktur manifestiert sich in einem DSC-Peak > 210°C).

Die TPU-basierte Trägerschicht ist in einer bevorzugten Ausführungsform geschäumt. Vorzugsweise erfolgt die Schäumung mit Mikroballons. Alternativ können auch chemische und/oder physikalische Treibmittel eingesetzt werden. Die nachstehenden Angaben zur Schäumung betreffend den Träger auf Basis von, vorzugsweise unvernetztem, Polyurethan, der aus einer Dispersion hergestellt worden ist, gelten analog für den TPU-basierten Träger.

Die Trägerschicht auf Basis von thermoplastischem Polyurethan weist geeignete mechanische Eigenschaften zur Verwendung in einem durch dehnendes Verstrecken ablösbaren Klebeband auf. Vorzugsweise weist die Trägerschicht in Längsrichtung eine Reißdehnung von mindestens 600%, besonders bevorzugt mindestens 800% auf.

Die Trägerschicht kann undurchsichtig, optisch klar oder transparent sein.

Zur Folienproduktion findet herkömmlich hauptsächlich der Blasfolien-Prozess von mehreren Schichten Anwendung. Hier werden eine PE-Schicht (d.h. Polyethylen-Schicht) und die eigentliche TPU-Schicht im Blasfolienprozess als coextrudierte Folie hergestellt (d.h. die PE-Schicht fungiert als Stützträger, der dem Extrudat die notwendige mechanische Stabilität gibt). Der PE-Stützträger wird in der Anwendung also vor der Herstellung des Klebebandes entfernt, d.h. stellt einen temporären Träger dar. Zur Herstellung einer entsprechenden Blasfolie sind aber zahlreiche Additive wie sogenannte Antiblockmittel (z.B. Silikat-Partikel) und Gleitwachse notwendig, um ein Verblocken der PU Folie beim Zusammenlegen der Blase im Blasfolienprozess zu vermeiden. Das Problem ist hierbei, dass TPUs nach dem Aufschmelzen noch etwa 1h klebrig sind. Beide Tatsachen (kristalline Überstruktur und Additive vor allem Silikat-Partikel) führen zu einer negativen Beeinflussung der mechanischen Eigenschaften. Sowohl die Silikatpartikel in der Folie (= Fehlstellen) als auch die kristalline Überstruktur (= harte nicht flexible Domänen) führen zu einer geringeren Dehnbarkeit und vor allem zu einer höheren Reißerneigung in der Anwendung, d.h. beim dehnenden Verstrecken. Die Wachse führen zusätzlich zu Problemen mit Klebkraftreduktion (durch Migration der Wachse an die PSA-Oberfläche, d.h. Oberfläche der Haftklebemasse) sowie zu Schwierigkeiten der Verankerung der PSA auf der Folie. Vorteilhaft für eine hohe Dehnbarkeit und eine geringe Reißerneigung ist zusätzlich ein hohes Molekulargewicht des PU-Polymers (Erhöhung der Zähigkeit der Folie).

b) Träger auf Basis von Polyurethan, hergestellt aus Dispersion:

Der mindestens eine Träger des Klebebands nach Anspruch 4 enthält mindestens eine, vorzugsweise genau eine, Schicht auf Basis von, vorzugsweise unvernetztem, Polyurethan, die aus einer Dispersion hergestellt worden ist. Mit einer solchen Schicht auf Basis von Polyurethan ist typischerweise eine Schicht gemeint, deren Anteil an Polyurethan mindestens 50 Gew.-% beträgt. Vorzugsweise beträgt der Anteil an Polyurethan in der Schicht mindestens 90 Gew.-%. Das Polyurethan ist typischerweise thermoplastisch.

Das Polyurethan ist insbesondere aus mindestens einer Polyisocyanatkomponente und mindestens einer Polyolkomponente zusammengesetzt, d.h. das Reaktionsprodukt aus zumindest den genannten Komponenten.

Als Polyurethan-Dispersionen im Sinne der vorliegenden Erfindung können insbesondere die folgenden Dispersionen, optional in Kombination, zum Einsatz kommen:

a) anionisch stabilisierte aliphatische Polyester-Polyurethan-Dispersionen (Dispersionen auf Basis von Polyester und aliphatischem anionischem Isocyanat-Polyurethan). Hierzu gehören die folgenden Produkte, die von der Covestro AG vertrieben werden: Impranil® LP RSC 1380, DL 1537 XP, DL 1554 XP.

b) anionisch stabilisierte aliphatische Polyether-Polyurethan-Dispersionen. Zu diesen zählen die folgenden Produkte, die von der Covestro AG vertrieben werden: Impranil® 25 LP DSB 1069.

c) anionisch stabilisierte aliphatische Polycarbonat-Polyester-Polyurethan-Dispersionen. Zu diesen zählen die folgenden Produkte, die von der Covestro AG vertrieben werden: Impranil® DLU.

d) anionisch stabilisierte Polycarbonat-Polyurethan-Dispersionen. Zu diesen zählen die folgenden Produkte, die von der Covestro AG vertrieben werden: Impranil® DL 2288 XP.

Hierbei handelt es sich um Polyurethan-Dispersionen mit einem hohen Feststoffanteil (ungefähr 30 bis 70 Gew.-%, vorzugsweise 50 bis 60 Gew.-%). Alle vorstehend unter a) bis d) genannten Produkte sind typischerweise frei von organischen Co-Lösungsmitteln.

Besonders bevorzugt ist dabei das Polyurethan aliphatisches Polyester-Polyurethan oder aliphatisches Polyether-Polyurethan, d.h. das Polyurethan basiert in diesem Fall auf aliphatischem Polyester oder aliphatischem Polyether.

Die Polyurethan-Dispersionen der vorliegenden Erfindung sind wässrig. Vorzugsweise sind sie frei von organischen Lösungsmitteln, sie können aber optional organische Lösungsmittel enthalten.

Die mindestens eine Polyisocyanatkomponente ist vorzugsweise ein Diisocyanat. Zum Einsatz kommen können aromatische Diisocyanate wie Toluoldiisocyanat (TDI) (besonders bevorzugt), p-Phenylendiisocyanat (PPDI), 4,4'-Diphenylmethandiisocyanat (MDI), p,p'-Bisphenyldiisocyanat (BPDI), oder insbesondere aliphatische Diisocyanate, wie Isophorondiisocyanat (IPDI), 1,6-Hexamethylenediisocynat (HDI), oder 4,4'-Diisocyanatodicyclohexylmethan (H12MDI). Ebenso kommen Diisocyanate mit Substituenten in Form von Halo-, Nitro-, Cyano-, Alkyl-, Alkoxy-, Haloalkyl-, Hydroxyl-, Carboxy-, Amido-, Amino- oder deren Kombinationen in Frage.

Insgesamt können alle an sich bekannten aliphatischen, cycloaliphatischen, araliphatischen und vorzugsweise die aromatischen mehrwertigen Isocyanate zum Einsatz kommen.

Im Einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-1,4-diisocyanat, 2-Methyl-pentamethylen-1,5-diisocyanat, Tetramethylen-1,4-diisocyanat, und vorzugsweise Hexamethylen-1,6-diisocyanat; cycloaliphatische Diisocyanate wie Cyclohexan-1,3-diisocyanat und Cyclohexan-1,4-diisocyanat und beliebige Gemische dieser Isomeren, 1-Isocyanato-3,3,5-trimethyl-5-isocyanatomethylcyclohexan (Isophorondiisocyanat), 2,4- und 2,6 Hexahydrotoluylendiisocyanat sowie beliebige Gemische dieser Isomeren, 4,4'-, 2,4'- und 2,2'-Dicyclohexylmethandiisocyanat sowie beliebige Gemische dieser Isomeren, und vorzugsweise aromatische Di- und Polyisocyanate, wie beispielsweise 2,4- und 2,6-Toluylen-diisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'- Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Vorzugsweise weist die Polyisocyanatkomponente ein zahlenmittleres Molekulargewicht von 60 bis 50.000 g/mol, insbesondere von 400 bis 10.000 g/mol, bevorzugt von 400 bis 6.000 g/mol, auf.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht. Beispiele sind niedermolekulare Diolen, Triolen, Dialkylenglycolen, Trialkylenglycolen oder Polyoxyalkylenglycolen mit zahlenmittleren Molekulargewichten bis 6.000 g/mol, insbesondere bis

1.500 g/mol, modifiziertes Roh-MDI oder 2,4- bzw. 2,6-Toluylen-diisocyanat. Beispiele für geeignete Di- bzw. Polyoxyalkylenglycole sind Diethylen-, Dipropylen-, Polyoxyethylen-, Polyoxypropylen und Polyoxypropylenpolyoxyethylenglycole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethan-diisocyanat, 2,4- und/oder 2,6-Toluylendiisocyanat oder Roh-MDI. Bewährt haben sich ferner flüssige, Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, beispielsweise auf Basis von 4,4'-, 2,4'- und/oder 2,2'-Diphenylmethandiisocyanat und/oder 2,4- und/oder 2,6-Toluylen-diisocyanat.

Die modifizierten Polyisocyanate können miteinander oder mit unmodifizierten organischen Polyisocyanaten wie beispielsweise 2,4'-, 4,4'-Diphenylmethandiisocyanat, Roh-MDI, 2,4-und/oder 2,6-Toluylen-diisocyanat gemischt werden.

Besonders bewährt als Isocyanate haben sich Diphenylmethan-diisocyanat-Isomerengemische oder Roh-MDI und insbesondere Roh-MDI mit einem Diphenylmethandiisocyanat-Isomerengehalt von 30 bis 55 Gew.-% sowie urethangruppenhaltige Polyisocyanatgemische auf Basis von Diphenylmethan-diisocyanat mit einem NCO-Gehalt von 15 bis 33 Gew.-%.

Bevorzugte Gewichtsanteile der Polyisocyanatkomponente betragen von 10 bis 40 Gew.-%, insbesondere 13 bis 35 Gew.-% und besonders bevorzugt 15 bis 30 Gew.-%.

Erfindungsgemäß sind als Polyolkomponente nicht nur Polymere mit mindestens zwei Hydroxygruppen gemeint, sondern allgemein Verbindungen mit mindestens zwei gegenüber Isocyanaten aktiven Wasserstoffatomen.

Vorzugsweise ist die Polyolkomponente ein Diol, ein Polyetherdiol, ein Polyesterdiol, ein Polycarbonatdiol, ein Polycaprolactonpolyol oder ein Polyacrylatpolyol, wobei Polyetherdiol, Polyesterdiol und Polycarbonatdiol besonders bevorzugt sind, insbesondere Glycol, Propandiol, Butandiol, Pentandiol, Hexandiol, Cylohexandiol, Cyclohexyldimethanol, Oktandiol, Neopentylglycol, Diethylenglycol, Triethylenglycol, Trimethylpentandiol, Benzoldimethanol, Benzoldiol, Methylbenzoldiol, Bisphenol-A, Poly(butandiol-Co-Adipat)-glycol, Poly(hexandiol-Co-Adipat)-glycol, Poly(ethandiol-Co-Adipat)-glycol, Polytetramethylenglycol, Polypropylenglycol, Polyethylenglycol, oder eine Mischung daraus.

Die Hauptfunktion der Polyolkomponente besteht darin, mit der Polyisocyanatkomponente zu dem Polyurethanpolymer zu reagieren. Zusätzlich dient die Polyolkomponente jedoch auch als physikalischer Konditionierer, da die Elastizität des Polyurethans von dem Molekulargewicht der Polyolkomponente abhängig ist. Allgemein gilt, dass das resultierende Polyurethan umso weicher ist, je höher das Molekulargewicht der Polyolkomponente ist.

Vorzugsweise weist die Polyolkomponente ein zahlenmittleres Molekulargewicht von 60 bis 50.000 g/mol, insbesondere von 400 bis 10.000 g/mol, bevorzugt von 400 bis 6.000 g/mol, auf.

Zur Einstellung der Eigenschaften des herzustellenden Polyurethanträgers kann es vorteilhaft sein, dass das Ausgangsgemisch des Weiteren mindestens eine weitere Dispersion, typischerweise ausgewählt aus der Gruppe bestehend aus Polyurethan-Dispersionen, Polyurethan-Dispersionen, deren Polyolkomponente ein Comonomer mit Flammschutzwirkung aufweisen, Synthesekautschuk-Dispersionen, Naturkautschuk-Dispersionen und Polyacrylat-Dispersionen, enthält. Hierüber lässt sich u.a. die Stabilität des Polyurethanträgers und dessen Bruchdehnung verbessern.

Polyacrylat-Dispersionen enthalten wasserunlösliches Polyacrylat, das typischerweise mittels eines Emulgators in Wasser dispergiert ist. Sie enthalten beispielsweise etwa 30 bis 60 Gew.-% Polyacrylat und etwa 3 Gew.-% Emulgator. Beim Polyacrylat handelt es sich erfindungsgemäß um ein wasserunlösliches Polyacrylat, Polymethacrylat, Mischungen daraus oder Copolymeren mit anderen Monomeren. Beim Emulgator kann es sich um einen ionischen, nicht-ionischen oder sterischen Emulgator handeln. Dieser ist normalerweise nicht fest in die Polymerketten eingebaut. Acrylat-Dispersionen können weitere Additive, wie Filmbildner oder Co-Lösemittel, Entschäumer, Flammschutzmittel und/oder Benetzungsmittel enthalten.

Acrylatdispersionen werden typischerweise durch die Emulsionspolymerisation geeigneter Monomere erhalten. Hierzu werden diese mittels eines Emulgators fein in Wasser verteilt. Zur Emulsion der Monomere in Wasser wird ein wasserlöslicher Radikalinitiator gegeben. Da sich die aus diesem gebildeten Radikale bevorzugt im Wasser lösen, ist deren Konzentration in den Monomertröpfchen gering, so dass die Polymerisation dort sehr gleichmäßig ablaufen kann. Nach Beendigung der Polymerisation kann die Dispersion direkt verwendet werden, oft wird sie aber mit Additiven wie Entschäumern, Filmbildnern und/oder Benetzungsmitteln versetzt, um die Eigenschaften noch weiter zu verbessern.

Optional kann die Reaktion der OH-Gruppen der Polyolkomponente mit den Isocyanatgruppen katalysiert werden. Als Katalysator kommen insbesondere in Betracht:

Organische Metallverbindungen, vorzugsweise organische Zinnverbindungen, wie Zinn(II)salze von organischen Carbonsäuren, beispielsweise Zinn(II)acetat, Zinn(II)octoat, Zinn(II)ethylhexanoat, Zinn(II)laurat und die Dialkylzinn(IV)salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Dimethylbenzylamin, N-Methylimidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethylhexylen-1,6-diamin, Pentamethyldiethylentriamin, Tetramethyldiaminoethylether,

Bis- (dimethylaminopropyl)harnstoff, Dimethylpiperazin, 1,2-Dimethylimidazol, 1-Azabicyclo-[3.3.0]-octan, 1,4-Diazabicyclo-[2.2.2]-octan, außerdem Alkanolaminverbindungen wie Triethanolamin, Trisisopropanolamin, N-Methyl- und N-Ethyldiethanolamin und Dimethylethanolamin.

Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)formiat, N,N,N-Trimethyl-N-(2-hydroxypropyl)-2-ethylhexanoat, Tetraalkylammoniumhydroxide wie Tetramethylammonium-hydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Vorzugsweise werden tertiäre Amine, Zinnverbindungen, Alkali- und Erdalkalicarboxylate, quarternäre Ammoniumsalze, s-Hexahydrotriazine und Tris-(dialkylaminomethyl)phenole eingesetzt.

Es werden vorzugsweise 0,001 bis 5 Gew. -%, insbesondere 0,002 bis 2 Gew.-% Katalysator bzw. Katalysatorkombination, bezogen auf das Gesamtgewicht des Ausgangsgemisches, verwendet.

Das Polyurethan kann optional eine aktiven Wasserstoff enthaltende Komponente umfassen, die eine hydrophile Gruppe bilden kann, und zwar vorzugsweise von 1 bis 15 Gew.-%, insbesondere von 3 bis 10 Gew.-% und besonders bevorzugt von 4 bis 7 Gew.-%. "Aktiver Wasserstoff" bedeutet dabei, dass das Wasserstoffatom der Komponente in der Weise instabil ist, dass es leicht mit anderen Verbindungen eine chemische Reaktion, z.B. eine Substitutionsreaktion, eingehen kann, so dass sich eine hydrophile Gruppe bilden kann. Diese Komponente bewirkt, dass das Polyurethan effizient in Wasser dispergiert werden kann. Als hydrophile Gruppe kommen insbesondere in Frage: —COO-, $—SO_3^-$, $—NR_3^+$, oder $—(CH_2CH_2O)_n—$. Die eine aktiven Wasserstoff enthaltende Komponente kann beispielsweise sein: Dimethylolpropionsäure (DMPA), Dimethylolbuttersäure (DMBA), Poly(ethylenoxid)glycol, Bis(hydroxylethyl)amine, oder Natrium-3-bis(hydroxyethyl)aminopropansulfonat.

Die eine aktiven Wasserstoff enthaltende Komponente ist, wie vorstehend beschrieben, optional. Zum Zwecke der Dispergierung enthält die Polyurethan-Dispersion alternativ oder zusätzlich häufig mindestens ein Tensid.

Als besonders geeignete Tenside, die auch als Schaumstabilisator wirken, seien insbesondere Stokal® STA (Ammoniumstearat) und Stokal® SR (Succinamat) der Bozzetto Group genannt.

Es kommen jedoch auch weitere Tenside in Betracht, die insbesondere ausgewählt sein können aus der Gruppe, bestehend aus Ethersulfaten, Fettalkoholsulfaten, Sarcosinaten, organischen Aminoxiden, Sulfonaten, Betainen, Amiden organischer Säuren, Sulfosuccinaten, Sulfonsäuren, Alkanolamiden, ethoxylierten Fettalkoholen, Sorbinaten und deren Kombinationen.

Als weitere optionale Komponente kann das Ausgangsgemisch ein Verdickungsmittel enthalten. Hier kann z.B. Borchi® Gel 0625 verwendet werden. Weiterhin sind als Verdickungsmittel Polyetherurethanlösungen wie beispielsweise Ortegol PV301 der Evonik Industries geeignet. Ein Verdickungsmittel stellt insbesondere Stabilität beim Trocknen sicher.

Das Ausgangsgemisch kann weitere Additive wie Stabilisatoren oder Lichtschutzmittel enthalten. Auch Lösungsmittel können als weitere Additive zugesetzt werden, wobei der Anteil des Lösungsmittels bis zu 50 Gew. -%, bezogen auf die gesamte Menge des fertigen Ausgangsgemisches, betragen kann. Geeignet sind zur Herstellung von Polyurethanwerkstoffen gebräuchliche Lösungsmittel wie niedrig siedende Kohlenwasserstoffe mit Siedepunkten unter 100 °C, vorzugsweise unter 50 °C, aber auch andere Lösungsmittel wie beispielsweise Paraffine, halogenierte Kohlenwasserstoffe, halogenierte Paraffine, Ether, Ketone, Carbonsäurealkylester, Alkylcarbonate oder zusätzliche flüssige Flammschutzmittel wie Alkylphosphate wie beispielsweise Triethylphosphat oder Tributylphosphat, halogenierte Alkylphosphate wie beispielsweise Tris-(2-chlorpropyl)phosphat oder Tris-(1,3-dichlorpropyl)phosphat, Arylphosphate wie beispielsweise Diphenylkresylphosphat, Phosphonate wie beispielsweise Diethylethanphosphonat. Einsetzbar sind ebenfalls Gemische aus den genannten Lösungsmitteln.

Weitere optionale Additive sind Zellregler der an sich bekannten Art wie Paraffine oder Fettalkohole oder Dimethylpolysiloxane, Flammschutzmittel, Pigmente oder Farbstoffe, Stabilisatoren gegen Alterungs- und Witterungseinflüsse, Weichmacher, fungistatisch und bakteriostatisch wirkende Substanzen, Füllstoffe wie Bariumsulfat, Bentonit, Kaolin, Glaspulver, Glaskugeln, Glasfasern, Calciumcarbonat, Kieselgur, Quarzsand, Fluorpolymere, Thermoplasten, Mikrokugeln, expandierbarer Graphit, Ruß oder Schlämmkreide oder Kombinationen davon.

Ebenso können in einer bevorzugten Ausführungsform expandierbare Mikroballons zugegeben werden, die beim Trocknen der Trägermasse expandiert werden. Alternativ können vorexpandierte Mikroballons zugegeben werden. Die nachstehenden Ausführungen zu den Mikroballons, wie sie in bevorzugten erfindungsgemäßen Haftklebemasseschichten eingesetzt werden, gelten hier analog. Es können auf diesem Weg durch Mikroballons geschäumte Träger auf Polyurethanbasis, d.h. Polyurethanschäume, hergestellt werden.

Die vorliegende Erfindung umfasst auch ein Verfahren zur Herstellung eines Trägers auf Basis von Polyurethan, der aus einer Dispersion hergestellt worden ist, bei dem die Schäumung mittels Frothing erzielt worden ist. Das Verfahren umfasst typischerweise die folgenden Schritte:

a) Vorlegen einer wie vorstehend beschriebenen Polyurethan-Dispersion und mindestens eines Tensids sowie optional weiterer Komponenten, wie insbesondere weiterer Dispersionen, unter Bildung eines Ausgangsgemisches,

b) mechanisches Schäumen des Ausgangsgemisches unter Bildung einer feuchten Polyurethanschaummasse, optional unter Zugabe weiterer Komponenten, wie insbesondere Füllstoffe und/oder weiterer Additive,

c) Auftragen der feuchten Polyurethanschaummasse auf eine Oberfläche (typischerweise eines temporären Trägers, wie insbesondere eines Liners, oder einer Haftklebemasseschicht),

d) Trocken der feuchten Polyurethanschaummasse unter Erhalt des Polyurethanschaums.

Die Herstellung der Polyurethan-Dispersion kann dabei auf die nachfolgend beschriebene Weise erfolgen:

Die mindestens eine Polyolkomponente sowie optional die aktiven Wasserstoff enthaltende Komponente sowie Lösungsmittel (z.B. Aceton oder N-Methylpyrrolidon) werden in einen Behälter unter Stickstoffatmosphäre gegeben und - beispielsweise mit einem Flügelrührer - gerührt. Wenn die Komponenten gut durchmischt sind, wird die mindestens eine Polyisocyanatkomponente zugegeben und der Behälter für vier bis sechs Stunden auf ungefähr 40 bis 90°C erhitzt und anschließend abgekühlt. Wenn der Behälter auf 30° C bis 50° C abgekühlt ist, wird eine basische Lösung wie z.B. Triethylamin unter Rühren zugegeben und das Gemisch für fünfzehn bis zwanzig Minuten neutralisiert. Die Mischung wird dann in Wasser gegeben, optional kann an dieser Stelle ein Kettenverlängerer zugesetzt werden. Man erhält die erfindungsgemäße Polyurethan-Dispersion.

Zur Bildung des Polyurethanschaums wird die Ausgangsmischung, also die wie vorstehend oder auf andere Weise hergestellte Polyurethan-Dispersion zusammen mit dem mindestens einen Tensid, sowie optional einem Lösungsmittel und/oder den weiteren optionalen Bestandteilen mechanisch aufgeschlagen und geschäumt. Optional kann nach dem Aufschlagen ein Verdickungsmittel zugegeben werden.

Alternativ wird nicht zunächst eine Polyurethan-Dispersion hergestellt. Stattdessen kommt eine Präpolymer-Dispersion zum Einsatz, und das Präpolymer polymerisiert beim mechanischen Aufschlagen/Schäumen zum Polyurethan.

Es ist möglich, zusätzlich oder alternativ ein physikalisches Treibmittel zuzugeben. So kann die Ausgangsmischung beispielsweise in Anwesenheit eines Gases wie Luft, Stickstoff oder eines Edelgases wie zum Beispiele Helium, Neon, oder Argon geschäumt werden. Treibmittel können einzeln oder als Mischung verschiedener Treibmittel zum Einsatz kommen. Treibmittel können aus einer großen Anzahl Materialien ausgewählt werden, die folgendes umfasst: Kohlenwasserstoffe, Ether und Esters und Ähnliches. Typische physikalische Treibmittel weisen einen Siedepunkt im Bereich von -50° C bis +100°C, und vorzugsweise von -50°C bis +50°C auf. Bevorzugte physikalische Treibmittel umfassen Kohlenwasserstoffe wie n-Pentan, Isopentan, und Cyclopentan, Methylenchlorid, oder beliebige Kombinationen der vorstehend genannten Verbindungen. Solche Treibmittel können bevorzugt in Mengen von 5 Gew.-% bis 50 Gew.-% des Reaktionsgemisches, insbesondere von 10 Gew.-% bis 30 Gew.-% des Reaktionsgemisches eingesetzt werden.

Ebenso ist es möglich, zusätzlich oder alternativ ein chemisches Treibmittel zuzugeben. Chemische Treibmittel sind Substanzen, die erst während des Verarbeitungsprozesses aufgrund einer chemischen Reaktion - meist eingeleitet durch Wärmezufuhr - Gas abspalten und dadurch die Erzeugung einer Schaumstruktur im Polymer ermöglichen. Ursache für die Gasabspaltung kann entweder die thermische Zersetzung des Treibmittels oder eine chemische Reaktion verschiedener im Treibmittel enthaltener Substanzen sein. Das entstehende Gas ist zumeist $N_2$, $CO_2$ oder CO.

Geschäumte Träger aus Basis von Polyurethan weisen vorzugsweise eine Dichte von 250 kg/$m^3$ bis 500 kg/$m^3$, besonders bevorzugt 350 bis 450 kg/$m^3$ auf.

Optional kann über die Schaumschicht eine Folie aufgebracht werden. Die Folie kann, wenn sie gespannt ist, die Dicke der Schaumschicht begrenzen. Die Folie kann aber auch nur als Abdeckung fungieren.

In einer weiteren bevorzugten Ausführungsform kann der Schaum mittels einer Klinge oder eines Messers auf den temporären Träger, wie insbesondere Liner, bzw. die Haftklebemasseschicht aufgebracht werden, wodurch eine gleichmäßige Dicke der Schaumschicht erreicht wird, bevor diese in den Trockenofen gebracht bzw. gefahren wird. Alternativ können auch Walzen vorgesehen sein, um die Dicke der Schaumschicht einzustellen.

Nach Aufbringen der Schaumschicht auf den Träger und optionaler Abdeckung mit einer Folie erfolgt die Trocknung, vorzugsweise in einem Trockenofen. Bevorzugte Temperaturen zum Trocknen betragen von 50°C bis 180°C, vorzugsweise von 50 °C bis 120 °C, insbesondere von 70°C bis 115°C, ganz besonders bevorzugt von 100°C bis 115°C. Vorzugsweise beträgt die Temperatur mindestens 50°C, insbesondere mindestens 60°C, bevorzugt mindestens 70°C, insbesondere mindestens 80°C, ganz besonders bevorzugt mindestens 90°C, insbesondere mindestens 100°C, insbesondere mindestens 110°C, sehr bevorzugt mindestens 120°C, insbesondere mindestens 130°C. Weiterhin beträgt die Temperatur vorzugsweise höchstens 180°C, insbesondere höchstens 170°C, besonders bevorzugt höchstens 160°C, insbesondere höchstens 150°C.

Vorzugsweise erfolgt das Trocknen in Schritt d) der oben angegebenen Verfahrensfolge in mindestens zwei Stufen, wobei die Temperatur der Trocknung von einem Schritt zum nächsten erhöht wird. Anders als bei Verwendung von hohen Ausgangstemperaturen (z.B. 120°C) beim Trocknen ermöglicht eine gestufte Erhöhung der Trocknungstemperatur ein gleichmäßiges Trocknen, was zu einer gleichmäßigen Verteilung der Zellgrößen führt. Bei geringerer Temperatur erfolgt zunächst eine relativ gleichmäßige Vortrocknung des gesamten Schaums und im weiteren Schritt bei höherer Temperatur die Entfernung der Restfeuchte.

Es kann jedoch auch wünschenswert sein, eine über den Querschnitt variierende Zellgröße zu erreichen. In diesem Fall sollte gleich mit einer hohen Trocknungstemperatur gearbeitet werden. Das sorgt dafür, dass der Schaum an der Oberfläche schnell trocknet, im Inneren hingegen lange Zeit feucht bleibt, wodurch sich die über den Querschnitt unterschiedliche Zellgrößenverteilung ergibt.

Besonders bevorzugt erfolgt das Trocknen in Schritt d) in zwei Stufen, wobei die Temperatur der Trocknung im 1. Schritt von 50°C bis 100°C, vorzugsweise 70°C bis 90°C, insbesondere 80°C, und die Temperatur der Trocknung im 2. Schritt von 105°C bis 180°C, vorzugsweise 110°C bis 150°C, insbesondere 120°C, beträgt.

Vorzugsweise ist die PU-basierte Trägerschicht aus Dispersion frei von Additiven wie Antiblockmittel und Wachsen. Ebenso vorzugsweise weist das Polyurethan keine kristalline Überstruktur auf.

Die PU-basierte Trägerschicht aus Dispersion oder das Klebeband, das diese Schicht enthält, ist zudem üblicherweise einer Temperierung bei mindestens 150 °C unterzogen worden, um die Zugfestigkeit zu optimieren.

Erfindungsgemäße Haftklebemassen:

In den erfindungsgemäßen Klebebändern ist auf dem mindestens einen Träger mindestens einseitig eine Haftklebemasseschicht angeordnet.

Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen,

minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G'' = (\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10° bis $10^1$ rad/sec G' zumindest zum Teil im Bereich von $10^3$ bis $10^7$ Pa liegt und wenn G" ebenfalls zumindest zum Teil in diesem Bereich liegt. "Zum

Teil" heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Die Haftklebemasseschichten der erfindungsgemäßen Klebebänder können auf Polymeren unterschiedlicher chemischer Struktur basieren. Beispielsweise können sie auf Acrylat(co)polymer, Silikon(co)polymer, Nitrilkautschuk, d.h. Acrylnitril-Butadien-Kautschuk, oder chemisch oder physikalisch vernetztem Synthesekautschuk basieren.

In einer bevorzugten Ausführungsform basieren sie auf Acryla(co)polymer.

Besonders bevorzugt bestehen die Haftklebemasseschichten der erfindungsgemäßen Klebebänder aus einer Haftklebemasse auf Basis von Vinylaromatenblockcopolymer, wie insbesondere Styrolblockcopolymer. Damit ist typischerweise gemeint, dass der Elastomerteil der Haftklebemasse zu mindestens 50 Gew.-% aus Vinylaromtenblockcopolymer besteht. Vorzugsweise besteht der Elastomerteil zu mindestens 90 Gew.-% aus Vinylaromatenblockcopolymer und insbesondere im Wesentlichen aus Vinylaromatenblockcopolymer. In einer weiteren bevorzugten Ausführungsform enthält die Haftklebemasse neben Vinylaromatenblockcopolymer keine weiteren Elastomere in Mengen, die die wesentlichen Eigenschaften des Vinylaromatenblockcopolymers wesentlich beeinflussen.

Bevorzugt ist als Vinylaromatenblockcopolymer mindestens ein Synthesekautschuk in Form eines Blockcopolymers mit einem Aufbau A-B, A-B-A, $(A-B)_n$, $(A-B)_nX$ oder $(A-B-A)_nX$, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, $(A-B)_3X$ oder $(A-B)_4X$, wobei für A, B und X die vorstehenden Bedeutungen gelten, und wobei mindestens ein Blockcopolymer mindestens zwei Hartblöcke enthält. Ganz besonders bevorzugt sind alle Synthesekautschuke der erfindungsgemäßen Haftklebemasse Blockcopolymere mit einem Aufbau A-B, A-B-A, $(A-B)_3X$ oder $(A-B)_4X$, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, $(A-B)_3X$ oder $(A-B)_4X$, das bevorzugt mindestens Diblockcopolymere A-B und/oder Triblockcopolymere A-B-A enthält.

Weiterhin vorteilhaft ist ein Gemisch aus Diblock- und Triblockcopolymeren und $(A-B)_n$ oder $(AB)_nX$-Blockcopolymeren mit n größer gleich 3.

Als Haftklebemassen finden bevorzugt solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus diesen Anwendung. Dabei können die Produkte auch teilweise oder vollständig im Dien-Block hydriert sein. Blockcopolymere von Vinylaromaten und Isobutylen sind ebenfalls erfindungsgemäß nutzbar.

Vorzugsweise besitzen die Blockcopolymere der Haftklebemassen Polystyrolendblöcke.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Die vorgenannten Polymere können allein oder im Gemisch miteinander genutzt werden, wobei A-B-Zweiblockcopolymere nicht allein einsetzbar sind.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Vinylaromaten zum Aufbau des Blocks A umfassen bevorzugt Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen. Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien, oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C, insbesondere mindestens 50 °C und für B-Blöcke höchstens 25 °C, insbesondere höchstens -25 °C) wider.

In einer bevorzugten Ausgestaltung beträgt der Anteil der Vinylaromatenblockcopolymere, insbesondere Styrolblockcopolymere, in Summe bezogen auf die gesamte Haftklebemasse 15 bis 40 Gew.-%, besonders bevorzugt sind 20 bis 35 Gew.-%. Ein zu geringer Anteil an Vinylaromatenblockcopolymeren hat zur Folge, dass die Kohäsion der Haftklebemasse relativ niedrig ist, so dass die Reißfestigkeit, die zum Strippen erforderlich ist, zu gering ist. Ein zu hoher Anteil an Vinylaromatenblockcopolymere hat wiederum zur Folge, dass die Haftklebemasse kaum noch haftklebrig ist.

Erfindungsgemäße Haftklebemassen basieren insbesondere auf Vinylaromatenblockcopolymeren wie Styrolblockcopolymeren. Die Haftklebrigkeit wird durch Zugabe von mit der Elastomerphase mischbaren Klebharzen erreicht. Die Haftklebemassen weisen neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Unter einem "Klebharz" wird entsprechend dem allgemeinem Fachmannverständnis ein oligomeres oder polymeres Harz verstanden, das die Adhäsion (den Tack, die Eigenklebrigkeit) der Haftklebemasse im Vergleich zu der keinen Klebharz enthaltenden, ansonsten aber identischen Haftklebemasse erhöht.

In einer bevorzugten Ausführungsform besteht die Klebemassenschicht aus einer Haftklebemasse, die auf Basis von Vinylaromatenblockcopolymeren und Klebharzen aufgebaut ist, wobei vorzugsweise zu mindestens 30 Gew.-%, und vorzugsweise zu mindestens 50 Gew.-% (jeweils bezogen auf den Gesamtklebharzanteil) ein Klebharz gewählt wird mit einem DACP (diacetone alcohol cloud point) von größer -20 °C, bevorzugt größer 0 °C, und einer Erweichungstemperatur (Ring & Ball) von größer gleich 70 °C, vorzugsweise größer gleich 100 °C.

Besonders bevorzugt handelt es sich bei den Klebharzen zu mindestens 30 Gew.-%, wie insbesondere mindestens 50 Gew.-% (jeweils bezogen auf den Gesamtklebharzanteil) um Kohlenwasserstoffharze oder Terpenharze oder eine Mischung dergleichen.

Es wurde gefunden, dass als Klebharze für die Haftklebemasse(n) insbesondere unpolare Kohlenwasserstoffharze zum Beispiel hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5$/$C_9$- oder Cg-Monomerströmen, Polyterpenharze auf Basis von $\alpha$-Pinen und/oder ß-Pinen und/oder $\delta$-Limonen vorteilhaft eingesetzt werden können. Vorgenannte Klebharze können sowohl allein als auch im Gemisch eingesetzt werden. Dabei können sowohl bei Raumtemperatur feste als auch flüssige Harze zum Einsatz kommen. Klebharze, hydriert oder nicht hydriert, die auch Sauerstoff enthalten, können optional bevorzugt bis zu einem maximalen Anteil von 70 Gew.-% bezogen auf die Gesamtmasse der Harze in der Klebemasse eingesetzt werden.

Der Anteil der bei Raumtemperatur flüssigen Harze beträgt gemäß einer bevorzugten Variante bis zu 15 Gew.-%, vorzugsweise bis zu 10 Gew.-% bezogen auf die gesamte Haftklebemasse.

Die erfindungsgemäße Haftklebemasse enthält bevorzugt 20 bis 60 Gew.-%, bezogen auf das Gesamtgewicht der Haftklebemasse, mindestens ein Klebharz. Besonders bevorzugt sind zu 30 bis 50 Gew.-%, bezogen auf das Gesamtgewicht der Haftklebemasse, Klebharze enthalten.

Als weitere Additive können typischerweise genutzt werden:

- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Haftklebemasse

- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse

- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse

- Prozessstabilisatoren wie zum Beispiel C-Radikalfänger, vorzugsweise mit einem Anteil von 0,2 bis 1Gew.-% bezogen auf das Gesamtgewicht der Haftklebemasse

- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse

- Verarbeitungshilfsmittel, vorzugsweise mit einem Anteil von 0,2 bis 1 Gew.-% bezogen auf das Gesamtgewicht der Haftklebemasse

- Endblockverstärkerharze, vorzugsweise mit einem Anteil von 0,2 bis 10 Gew.-% bezogen auf das Gesamtgewicht der Haftklebemasse sowie

- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die Art und Menge der Abmischkomponenten kann bedarfsweise ausgewählt werden.

Erfindungsgemäß ist es auch, wenn die Klebemasse einige vorzugsweise alle der genannten Zuschlagstoffe jeweils nicht aufweist.

In einer Ausführungsform der vorliegenden Erfindung enthält die Haftklebemasse auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebemassen können auch mit Farbstoffen oder Pigmenten eingefärbt sein. Die Klebemassen können weiß, schwarz oder farbig sein.

Als Weichmacher können zum Beispiel (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

In einer bevorzugten Ausführungsform ist die mindestens eine Haftklebemasseschicht geschäumt, insbesondere durch Mikroballons.

Gemäß einer bevorzugten Ausführungsform der Erfindung besteht die Klebemasse nur aus Vinylaromatenblockcopolymeren, Klebharzen, Mikroballons und gegebenenfalls den oben erwähnten Additiven.

Weiter vorzugsweise besteht die Klebemasse aus folgender Zusammensetzung:

- Vinylaromatenblockcopolymere 20 bis 75 Gew.-%

- Klebharze 24,6 bis 60 Gew.-%

- Mikroballons 0,2 bis 10 Gew.-%

- Additive 0,2 bis 10 Gew.-%

Weiter vorzugsweise besteht die Klebemasse aus folgender Zusammensetzung:

- Vinylaromatenblockcopolymere 35 bis 65 Gew.-%

- Klebharze 34,6 bis 45 Gew.-%

- Mikroballons 0,2 bis 10 Gew.-%

- Additive 0,2 bis 10 Gew.-%

Die erfindungsgemäße Haftklebemasse ist in einer bevorzugten Ausführungsform geschäumt. Die Schäumung erfolgt typischerweise durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylat Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Nouryon.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE (Dry Expanded) von der Firma Nouryon kommerziell erhältlich.

Erfindungsgemäß beträgt der mittlere Durchmesser der von den Mikroballons gebildeten Hohlräume in den geschäumten Haftklebemasseschichten vorzugsweise 10 bis 200 μm, stärker bevorzugt von 15 bis 200 μm. Da hierbei die Durchmesser der von den Mikroballons gebildeten Hohlräume in den geschäumten Haftklebemasseschichten vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der Haftklebemasseschicht gemeint. Die Bestimmung des mittleren Durchmessers der von den Mikroballons gebildeten Hohlräume in einer Haftklebemasseschicht erfolgt anhand von 5 verschiedenen Kryobruchkanten des Klebebands im Rasterelektronenmikroskop (REM) bei 500-facher Vergrößerung. Die Durchmesser der auf den Aufnahmen zu sehenden Mikroballons werden graphisch derart ermittelt, dass aus den REM-Aufnahmen für jeden einzelnen Mikroballon der zu untersuchenden Haftklebemasseschicht dessen maximale Ausdehnung in beliebiger (zweidimensionaler) Richtung entnommen wird und als dessen Durchmesser angesehen wird.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasse liegt gemäß einer bevorzugten Ausführungsform der Erfindung zwischen größer 0 Gew. % und 10 Gew.-%, insbesondere zwischen 0,25 Gew.-% und 5 Gew.-%, ganz insbesondere zwischen 0,5 und 1,5 Gew.-% jeweils bezogen auf die Gesamtzusammensetzung der Klebemasse. Die Angabe bezieht sich auf unexpandierte Mikroballons.

Eine erfindungsgemäße, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die erfindungsgemäße Haftklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Haftklebemasse beträgt vorzugsweise 220 bis 990 kg/$m^3$, bevorzugter 300 bis 970 kg/$m^3$, stärker bevorzugt 450 bis 900 kg/$m^3$, insbesondere 500 bis 850 kg/$m^3$. Die relative Dichte beschreibt das Verhältnis der Dichte der geschäumten erfindungsgemäßen Haftklebemasse zur Dichte der rezepturidentischen, ungeschäumten erfindungsgemäßen Haftklebemasse. Die relative Dichte einer erfindungsgemäßen Haftklebemasse beträgt vorzugsweise 0,20 bis 0,99, stärker bevorzugt 0,30 bis 0,97, insbesondere 0,45 bis

0,90, wie zum Beispiel 0,50 bis 0,85.

In einer Ausführungsform der Erfindung sind eine oder beide Oberflächen der Haftklebemasseschichten physikalisch und/oder chemisch vorbehandelt. Eine solche Vorbehandlung kann beispielweise durch Plasmavorbehandlung und/oder Primerung erfolgen. Sofern beide Oberflächen der Haftklebemasseschichten vorbehandelt sind, kann die Vorbehandlung jeder Oberfläche unterschiedlich erfolgen oder insbesondere können beide Oberflächen gleich vorbehandelt sein.

Die Plasma-Behandlung - insbesondere Niederdruck-Plasmabehandlung - ist ein bekanntes Verfahren zur Oberflächenvorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene.

Als Primer werden allgemein Beschichtungen oder Grundierungen bezeichnet, die insbesondere haftvermittelnde und/oder passivierende und/oder korrosionshemmende Wirkung besitzen. Im Rahmen der vorliegenden Erfindung kommt es insbesondere auf die haftvermittelnde Wirkung an. Haftvermittelnde Primer, oft auch Haftvermittler oder Adhesion Promoter genannt, sind vielfach in Form von kommerziellen Produkten oder aus der technischen Literatur bekannt.

Die erfindungsgemäßen Haftklebemasseschichten sind typischerweise 10 bis 200 $\mu$m dick, vorzugsweise 15 bis 100 $\mu$m dick und insbesondere 25 bis 60 $\mu$m dick.

Verfahren zur Herstellung von TPU-Trägern mittels Extrusion:

Figur 1 zeigt beispielhaft das Verfahren zur Herstellung von TPU-Trägern mittels Extrusion von TPU und bahnförmiger Ausformung. Darin haben die Bezugszeichen die folgende Bedeutung:

A: Ausgangsstoffe: alle zu Herstellung des Gemisches G benötigten Materialien
G: homogenes Gemisch
1: kontinuierliches Mischaggregat oder Förderaggregat mit Mischzonen, zum Beispiel Einschnecken- oder Doppelschneckenextruder, Planetwalzenextruder oder Ähnliches
11: Heizzonen des kontinuierlichen Mischaggregates
12: Auslass des kontinuierlichen Mischaggregates oder Förderaggregates mit Mischteil
13: diverse Dosieröffnungen, unterschiedliche Bauarten
2: optionaler Heizschlauch, Heizzone, nicht in allen Prozessführungen notwendig
3: Düse zur Vorausformung des Extrudats, z.B. Breitschlitzdüse, Koextrusionsdüse, Mehrschichtdüse
4: Beschichtungseinheit, Auftragswerk, Ablagewalze mit oder ohne Gegendruckwalze, Kalander, oder Ähnliches, gekühlt oder beheizbar

Nicht abgebildet sind:

- Systeme zur Oberflächenbehandlung der Trägermaterialien oder gefertigten Schichten, wie z.B. Corona, UV oder Ähnliches
- Abwickelstationen - zur Vorlage von Folien mit oder ohne Releaseeigenschaften, Trägern, Textilträgern oder Ähnliches
- Aufwickelstationen - zur Aufwicklung des Endproduktes, Hilfsträgern oder Ähnlichem
- Dosieraggragate, -systeme

a) Extrusion und Beschichtung von kompaktem TPU:

Alle Bestandteile der herzustellenden Rezeptur basierend auf TPU werden zunächst in einem Granulattrockner (T = 90°C, 3h) getrocknet und anschließend einem kontinuierlichen Misch- oder Förderaggregat mit Mischteil 1 über Dosieröffnungen 13 und Dosier- oder Fördersysteme zugeführt. Die Temperaturführung erfolgt entsprechend der benötigten optimalen Bedingungen für die Herstellung einer homogenen Mischung G.

Der Auslass 12 des kontinuierlichen Förderaggregates mit Mischteil oder Mischaggregates bzw. die weiteren Bauteile zur Förderung des Extrudats zur Vorausformung über eine Düse oder Verteilerkanals oder direkt zur Beschichtungseinheit 4 können unterschiedlich gestaltet sein. Um eine Flachfolie zu beschichten, eignet sich eine Breitschlitzdüse zur Vorausformung des Exdrudats bzw. eines Schmelzefilms. Dieser wird entweder direkt auf eine rotierende, in der Regel gekühlte Walze abgelegt (sogenannte Chillroll), wobei zusätzlich über die Abzugsgeschwindigkeit die Schichtdicke reguliert werden kann. Oder es wird direkt auf ein Vormaterial, wie z.B. (temporären) Träger oder Funktionsschicht, wie insbesondere eine Haftklebemasseschicht, beschichtet.

In einem besonders vorteilshaften, erfindungsgemäßen Verfahren wird das zuvor homogenisierte Gemisch, Extrudat über eine Breitschlitzdüse zu einem Schmelzefilm ausgeformt und direkt auf eine erste Klebmassenschicht beschichtet, die auf einem temporären Träger, wie insbesondere einem (silikonisiertem) Liner, angeordnet ist. Diese vorgefertigte Funktionsschicht wird zuvor über eine Abwickelstation über die Kühlwalze zugeführt.

Dieser Verbund aus temporärem Träger (Liner), Klebmassen- und PU-Schicht wird vor der Aufwicklung zum Ballen mit einer zweiten vorgefertigten Klebmassenschicht auf einem temporären Träger (wie insbesondere Releaseliner) kaschiert. Das Endprodukt besteht nun aus drei Schichten (Klebmasse-PU-Träger-Klebmasse), eingedeckt zwischen zwei temporären Trägern (wie insbesondere Linern). Ein temporärer Träger (wie insbesondere ein Liner) kann vor der Aufwicklung zum Ballen ausgedeckt werden.

Diese Verfahrensweise hat viele Vorteile: ein mehrlagiges Produkt kann besonders effizient hergestellt werden, die Verbundfestigkeit/ Verankerung zwischen Klebmasse (oder Funktions-/ Trägerschicht jeglicher Art) und TPU-Schicht wird verbessert, der oft problematische Zwischenschritt der Transferbeschichtung (TPU auf Release-Träger) wird einfach vermieden. So werden auch besonders weiche TPU-Typen für die Produktion zugänglich und Prozesshilfsmittel, wie Wachse und/oder Gleitmittel, koextrudierte Stützträger oder zusätzliche Hilfsliner wie sie üblicherweise bei der Herstellung von TPU-Trägern benötigt werden, entfallen.

b) Extrusion und Beschichtung von geschäumtem TPU:

Alle Bestandteile der herzustellenden Rezeptur, basierend auf TPU (nach Trocknung), inklusive der unexpandierten Mikroballons, werden einem kontinuierlichen Misch- oder Förderaggregat mit Mischteil 1 über Dosieröffnungen 13 und Dosier- oder Fördersysteme zugeführt. Die Temperaturführung erfolgt entsprechend der benötigten optimalen Bedingungen für die Herstellung einer homogenen Mischung G und der Schäumung der Mikroballons. Bis zum Auslass 12 besteht ein kontinuierlicher Gegendruck, um eine vorzeitige Expansion der Mikroballons zu vermeiden.

Der Auslass 12 des kontinuierlichen Förderaggregates mit Mischteil oder Mischaggregates bzw. die weiteren Bauteile zur Förderung des Extrudats zur Vorausformung über eine Düse oder Verteilerkanals oder direkt zur Beschichtungseinheit 4 können unterschiedlich gestaltet sein. Um eine Flachfolie zu beschichten, eignet sich eine Breitschlitzdüse zur Vorausformung des Exdrudats bzw. eines Schmelzefilms. Um die expandierenden Mikroballons daran zu hindern, die beschichtete Oberfläche zu durchbrechen und somit eine raue Oberfläche zu erzeugen, welche wiederum eine schlechte Verankerung zur Funktionsschicht hervorruft, wird ein Gegendruck während des Beschichtungsvorgangs benötigt. Dies kann z.B. eine Gegendruckwalze, Presseur auf der Beschichtungswalze sein oder die Beschichtung wird direkt in einem Kalander durchgeführt. Auch hier kann direkt auf ein Vormaterial, wie z.B. einen (temporären) Träger oder eine Funktionsschicht, wie insbesondere eine Haftklebemasseschicht, beschichtet werden.

Dieser Verbund aus temporärem Träger (Liner), Klebmassen- und PU-Schicht wird vor der Aufwicklung zum Ballen mit einer zweiten vorgefertigten Klebmassenschicht auf einem temporären Träger (wie insbesondere Releaseliner) oder jeglicher anderen Art von Funktionsschicht auf die gegenüberliegende Seite kaschiert.

Das Endprodukt besteht nun aus drei Schichten (Klebmasse- geschäumtem PU Träger-Klebmasse), eingedeckt zwischen zwei temporären Trägern (wie Linern). Ein temporärer Träger (Liner) kann vor der Aufwicklung zum Ballen ausgedeckt werden. Die Direktbeschichtung auf zusätzliche Funktionsschichten hat viele Vorteile: ein mehrlagiges Produkt kann besonders effizient hergestellt werden; die Verbundfestigkeit/ Verankerung zwischen Klebmasse oder Funktions-/ Trägerschicht jeglicher Art und TPU-Schicht wird verbessert; der oft problematische Zwischenschritt der Transferbeschichtung (TPU auf Release-Träger) wird einfach vermieden. So werden auch besonders weiche TPU Typen für die Produktion zugänglich und Prozesshilfsmittel, wie Wachse und/oder Gleitmittel, koextrudierte Stützträger oder zusätzliche Hilfsliner wie sie üblicherweise bei der Herstellung von TPU-Trägern benötigt werden, entfallen.

Geschlossenzellige, Mikroballons enthaltende TPU-Schäume sind kommerziell nicht erhältlich, so dass dieses erfindungsgemäße Verfahren und die daraus resultierenden Trägerschichten die Basis für innovative Produkte bilden.

Weitere Optionen zur Herstellung offenzelliger TPU-Schäume stehen zur Verfügung: die Zugabe von chemischen Treibmitteln oder die gezielte Injektion von Gas, d.h. physikalischem Treibmittel.

Das chemische Treibmittel wird direkt mit den Ausgangsstoffen in das kontinuierliche Förderaggregat mit Mischteil oder über eine der zusätzlichen Dosieröffnungen hinzugegeben. Die Verarbeitung und Beschichtung erfolgt wie oben beschrieben.

Die Injektion von Gas erfolgt über eine zusätzliche Dosieröffnung in den Extruder, in die Schmelzemischung. Die Zuführung des Gases erfolgt geregelt, so dass der Gasanteil in der Mischung und die resultierende Dichte eingestellt werden kann. Die Verarbeitung und Beschichtung erfolgen wie oben beschrieben.

Verfahren zur Herstellung von PU-Trägern aus Dispersion:

a) Herstellung und Beschichtung von PU-Dispersionen:

Für die Herstellung einer homogenen, blasenfreien Dispersionsmischung ist ein für Dispersionen geeignetes Rührequipment notwendig. Verdicker und / oder andere Additive werden zumeist mit Wasser vordispergiert und anschließend unter stetigem vorsichtigem Rühren portionsweise der PU-Dispersion zugeführt.

Beim Rührprozess sollten Tromben oder zu schnelle Drehzahlen vermieden werden, um ein ungewolltes Einrühren von Luft zu verhindern. Es ist ratsam, die Abmischung einige Stunden vor der Beschichtung anzufertigen, um ein Entweichen von eingerührten Luftbläschen zu begünstigen.

Die Beschichtung kann über unterschiedliche Auftragswerke, wie z.B. Rakel, Düse oder Verteilerkanäle usw. erfolgen. Die Trocknung der beschichteten PU-Dispersion erfolgt über Wärmezufuhr in einem Trockenkanal mit unterschiedlichen Heizzonen. Die Beschichtung der PU-Dispersion kann entweder auf einen (temporären) Träger oder direkt auf eine Funktionsschicht, wie insbesondere eine Haftklebemasseschicht, erfolgen. Nach der Trocknung und vor der Aufwicklung kann eine zweite Funktionsschicht auf die gegenüberliegende Seite dazu kaschiert werden, so dass ein mehrlagiges Produkt in einem Schritt hergestellt werden kann. Der so hergestellte Mehrschichtverbund wird zu einem Ballen aufgewickelt. Ein Liner oder anderer Hilfsträger können zuvor ausgedeckt werden.

Diese Verfahrensweise hat viele Vorteile: ein mehrlagiges Produkt kann besonders effizient hergestellt werden, die Verbundfestigkeit/ Verankerung zwischen Klebmasse oder Funktions-/ Trägerschicht jeglicher Art und PU-Schicht wird verbessert, der oft problematische Zwischenschritt der Transferbeschichtung (PU auf Release-Träger) wird einfach vermieden.

Die PU-basierte Trägerschicht aus Dispersion oder das Klebeband, das diese Schicht enthält, wird zudem üblicherweise einer Temperierung bei mindestens 150 °C unterzogen, um die Zugfestigkeit zu optimieren.

b) Herstellung und Beschichtung von schäumbaren PU-Dispersionen:

Für die Herstellung einer homogenen, blasenfreien, mit Mikroballons schäumbaren Dispersionsmischung ist ein für Dispersionen geeignetes Rührequipment notwendig. Verdicker und, oder andere Additive, wie auch die unexpandierten Mikroballons werden zumeist mit Wasser vordispergiert und anschließend unter stetigem, vorsichtigem Rühren portionsweise der PU-Dispersion zugeführt. Beim Rührprozess sollten Tromben oder zu schnelle Drehzahlen vermieden werden, um ein ungewolltes Einrühren von Luft zu verhindern. Es ist ratsam, die Abmischung einige Stunden vor der Beschichtung anzufertigen, um ein Entweichen von eingerührten Luftbläschen zu begünstigen.

Die Beschichtung kann über unterschiedliche Auftragswerke, wie z.B. Rakel, Düse oder Verteilerkanäle usw. erfolgen. Die Trocknung der beschichteten PU-Dispersion erfolgt über Wärmezufuhr unterhalb der Schäumungstemperatur in einem Trockenkanal mit unterschiedlichen Heizzonen. Die Beschichtung der PU-Dispersion kann entweder auf einen (temporären) Träger oder direkt auf eine Funktionsschicht wie insbesondere eine Haftklebemasseschicht erfolgen. Nach der Trocknung und vor der Aufwicklung kann eine zweite Funktionsschicht auf die gegenüberliegende Seite dazu kaschiert werden, so dass ein mehrlagiges Produkt in einem Schritt hergestellt werden kann.

Der so hergestellte Mehrschichtverbund wird zu einem Ballen aufgewickelt. Ein Liner oder anderer Hilfsträger können zuvor ausgedeckt werden. Diese Verfahrensweise hat viele Vorteile: ein mehrlagiges Produkt kann besonders effizient hergestellt werden, die Verbundfestigkeit/ Verankerung zwischen Klebmasse oder Funktions-/ Trägerschicht jeglicher Art und PU-Schicht wird verbessert, der oft problematische Zwischenschritt der Transferbeschichtung (PU auf Release-Träger) wird einfach vermieden.

In einem weiteren Arbeitsschritt wird der Gesamtverbund oder eine einzelne Schicht des schäumbaren PU-Trägers, doppelt mit temporärem Träger, wie insbesondere Hilfsliner, eingedeckt, durch weitere Zufuhr von Wärme durch einen Heizkanal oder heizbare Kontaktwalzen teilweise oder vollständig geschäumt bzw. die Mikroballons expandiert. Durch die doppelte Eindeckung des schäumbaren PU-Trägers mit Träger, Hilfsliner oder Funktionsschicht wird ein Durchbrechen der Oberfläche der expandierenden Mikroballons verhindert, so dass eine gute Verbundfestigkeit zwischen den einzelnen Schichten erreicht wird. Durch die Schäumung mit Mikroballons wird ein geschlossenzelliger PU-Schaum erzeugt. Üblicherweise wird die PU-basierte Trägerschicht aus Dispersion oder das Klebeband, das diese Schicht enthält, einer Temperierung bei mindestens 150 °C unterzogen, um die Zugfestigkeit zu optimieren.

Durch gezieltes Einrühren von Luft, dem sogenannten "Frothing" kann zudem ein offenzelliger PU-Schaum hergestellt werden. Hier wird durch dafür geeignetes Rührequipment und besonderen Rührbedingungen der Lufteinschlag kontrolliert provoziert. Der weitere Herstellprozess erfolgt analog dem oben beschriebenen Verfahren.

Nachfolgend wird die Erfindung durch einige beispielhafte Klebebänder näher erläutert. Anhand der nachfolgend beschriebenen Beispiele werden besonders vorteilhafte Ausführungen der Erfindung näher erläutert, ohne damit die Erfindung unnötig einschränken zu wollen.

**Beispiele:**

Tabelle 1 zeigt die in den (Vergleichs-)Beispielen eingesetzten Rohstoffe bzw. eingesetzten Materialien. Die Tabellen 2 und 3 zeigen die Rezepturen der in den (Vergleichs-)Beispielen hergestellten Träger bzw. Haftklebemasseschichten.

Tabelle 1: in den (Vergleichs-)Beispielen eingesetzte Rohstoffe bzw. Materialien.

| Rohstoff | Hersteller/ Lieferant | Beschreibung |
|---|---|---|
| Ortegol PV 301 | Evonik | Polyurethanlösung (Verdicker) |
| Borchi Gel 0625 | Borchers GmbH | Nichtionischer, Polyurethan-basierter Verdicker für wasserbasierte Beschichtunqssysteme |
| Expancel 920 DU 20 | Nouryon | Unexpandierte, expandierbare, trockene Mikroballons mit einem mittleren Durchmesser nach Expansion von 20 $\mu$m |
| Platilon U04 (hier Träger "TPU1" genannt): Folie aus Blasfolienextrusion Produktionsanlaqe | Covestro | Blasfolie (TPU-Folie) in den Dicken 30 $\mu$m, 50 $\mu$m und 100 $\mu$m, jeweils einseitig mit PE-Stützträger ausgerüstet, Shore-Härte A = 86 |
| Elastollan C85A10 (zur Herstellung des hier "TPU2" genannten Trägers) | BASF Polyurethanes GmbH | thermoplastisches Polyurethan (Granulat), Shore-Härte A = 87 |
| Desmopan 6064 A (zur Herstellung des hier "TPU3" genannten Trägers) | Covestro | thermoplastisches Polyurethan (Granulat), Shore-Härte A = 65 |
| Elastollan S60A15 (zur Herstellung des hier "TPU4" genannten Trägers) | BASF Polyurethanes GmbH | thermoplastisches Polyurethan (Granulat), Shore-Härte A = 60 |
| Impranil DL 1116 (zur Herstellung der hier "PUD1" bzw. "PUD3" bzw. "PUD4" genannten Träger) | Covestro | anionisch stabilisierte Polyester-PU-dispersion, 100% Modul (Film aus mit 1 Gew.-% Borchigel ALA verdickter Dispersion) = 1,4 MPa nach DIN 53504 |
| Impranil DL 1068 (zur Herstellung des hier "PUD2" genannten Trägers) | Covestro | Anionisch stabilisierte Polyether-PU-Dispersion, 100% Modul (Film aus mit 1 Gew.-% Borchigel ALA verdickter Dispersion) = 1,5 MPa nach DIN 53504 |
| Kraton D 1118 ES | Kraton Performance Polymers, Inc. | Elastomer: Styrol-Butadien-Styrol-Triblockcopolymer mit 78 Gew.-% Diblock, Blockpolystyrolqehalt: 33 Gew.-% |
| Calprene 401 | Dynasol Elastomers | Elastomer: radiales Styrol-Butadien-Styrol-Copolymer mit 10 Gew.-% Diblock, Blockpolystyrolqehalt: 20 Gew.-% |
| Kraton D1152 ES | Kraton Performance Polymers, Inc. | Elastomer: Styrol-Butadien-Styrol-Triblockcopolymer mit 15 Gew.-% Diblock, Blockpolystyrolqehalt: 29 Gew.-% |
| Kraton D1101 AS | Kraton Performance Polymers, Inc. | Elastomer: Styrol-Butadien-Styrol-Triblockcopolymer mit 16 Gew.-% Diblock, Blockpolystyrolqehalt: 31 Gew.-% |
| Irganox 1010 | BASF SE | Antioxidationsmittel |
| Wingtack 10 | Cray Valley USA, LLC | Flüssiges Kohlenwasserstoffharz (Weichharz) |
| Piccolyte A115 | Pinova Inc. | festes $\alpha$-Pinen-Klebharz, Ring und Ball-Erweichungstemperatur: 115 °c |

(fortgesetzt)

| Rohstoff | Hersteller/ Lieferant | Beschreibung |
|---|---|---|
| Dercolyte A115 | DRT | festes α-Pinen-Klebharz, Ring und Ball-Erweichungstemperatur: 115°C |

Tabelle 2: Rezepturen der in den (Vergleichs-)Beispielen hergestellten Träger.

| Träger-Bezeichnung | Komponente | Rohstoff | Anteil |
|---|---|---|---|
| Kernschicht SBC 1 | Elastomer | Kraton D1101 AS | 49,5 Gew.-% |
| | Klebharz | Piccolyte A115 | 49,5 Gew.-% |
| | Antioxidationsmittel | Irganox 1010 | 1,0 Gew.-% |
| Kernschicht TPU 1 (Dicken: 30 µm, 50 µm und 100 µm) | Epurex | Folie wurde zugekauft (siehe oben) | |
| Kernschicht TPU 2 | TPU-Granulat | Elastollan C85A10 | 100,0 Gew.-% |
| Kernschicht TPU 3 | TPU-Granulat | Desmopan 6064 A | 100,0 Gew.-% |
| Kernschicht TPU 4 | TPU-Granulat | Elastollan S60A15 | 100,0 Gew.-% |
| Kernschicht PUD 1 | PU-Dispersion | Impranil DL 1116 | 99,0 Gew.-% |
| | Verdicker | Orteqol PV 301 | 1,0 Gew.-% |
| Kernschicht PUD 2 | PU-Dispersion | Impranil DL 1068 | 100,0 Gew.-% |
| Kernschicht PUD 3 | PU-Dispersion | Impranil DL 1116 | 99,5 Gew.-% |
| | Verdicker | Borchi Gel 0625 | 0,5 Gew.-% |

(fortgesetzt)

| Träger-Bezeichnung | Komponente | Rohstoff | Anteil |
|---|---|---|---|
| Kernschicht PUD 4 | PU-Dispersion | Impranil DL 1116 | 99,5 Gew.-% |
| | Verdicker | Orteqol PV 301 | 0,5 Gew.-% |

Tabelle 3: Rezepturen der in den (Vergleichs-)Beispielen hergestellten Haftklebemasseschichten.

| Klebemasse-Bezeichnung | Komponente | Rohstoff | Anteil |
|---|---|---|---|
| Haftklebemasseschicht A | Elastomerteil | Calprene 401<br>Kraton D1118 ES | 25,0 Gew.-%<br>25,0 Gew.-% |
| | Harzteil | Piccolyte A115 | 48,5 Gew.-% |
| | Additiv | Irganox 1010 | 0,5 Gew.-% |
| | Mikroballons | Expancel 920 DU20 | 1,0 Gew.-% |
| Haftklebemasseschicht B | Elastomerteil | Calprene 401<br>Kraton D1118 ES | 25,0 Gew.-%<br>25,0 Gew.-% |
| | Harzteil | Piccolyte A115 | 48,5 Gew.-% |
| | Weichharzteil | Winqtack 10 | 1,0 Gew.-% |
| | Additiv | Irganox 1010 | 0,5 Gew.-% |
| Haftklebemasseschicht C | Elastomerteil | Kraton D1152 ES | 47,5 Gew.-% |
| | Harzteil | Dercolyte A115 | 47,5 Gew.-% |
| | Weichharzteil | Winqtack 10 | 3,0 Gew.-% |
| | Additiv | Irganox 1010 | 0,5 Gew.-% |
| | Mikroballons | Expancel 920 DU20 | 1,5 Gew.-% |
| Haftklebemasseschicht D | Elastomerteil | Kraton D1118 ES<br>Calprene C401 | 33,0 Gew.-%<br>27,0 Gew.-% |
| | Harzteil | Dercolyte A115 | 36,5 Gew.-% |
| | Weichharzteil | Winqtack 10 | 2,0 Gew.-% |
| | Additiv | Irqanox 1010 | 0,5 Gew.-% |
| | Mikroballons | Expancel 920 DU 20 | 1,0 Gew.-% |
| Haftklebemasseschicht E | Elastomerteil | Kraton D1118<br>Calprene C401 | 33,0 Gew.-%<br>27,5 Gew.-% |
| | Harzteil | Dercolyte A115 | 37,0 Gew.-% |
| | Weichharzteil | Wingtack 10 | 2,0 Gew.-% |
| | Additiv | Irganox 1010 | 0,5 Gew.-% |

Tabelle 4 zeigt den Aufbau der Klebebänder der (Vergleichs-)Beispiele, die durch Kombination der vorstehend genannten Träger aus Tabelle 2 und Haftklebemassen aus Tabelle 3 gebildet sind. Die Klebebänder sind jeweils doppelseitig, d.h. auf dem Träger ist jeweils beidseitig eine Haftklebemasseschicht angeordnet.

Tabelle 4: Aufbau der Klebebänder der (Vergleichs-)Beispiele.

| **Beispiel** | **Träger** | | | **Haftklebemassenschicht** | | **Klebeband** |
|---|---|---|---|---|---|---|
| | Variante | Dicke [μm] | Shore-Härte A | Bezeichnung (jew. beidseitig) | Dicke [μm] | Dicke [μm] |
| **1** (Vgl.) | TPU 1 | 30 | 86 | C | 60 | 150 |
| **2** (Vgl.) | SBC 1 | 100 | | A | 25 | 150 |
| **3** (Vgl.) | TPU 1 | 30 | 86 | A | 60 | 150 |
| **4** (Vgl.) | TPU 1 | 50 | 86 | A | 50 | 150 |
| **5** (Vgl.) | TPU 1 | 100 | 86 | A | 25 | 150 |
| **6** | TPU 3 | 100 | 65 | A | 25 | 150 |
| **7** | TPU 4 | 100 | 60 | A | 25 | 150 |
| **8** | TPU 4 | 30 | 60 | B | 60 | 150 |
| **9** | TPU 4 | 50 | 60 | B | 50 | 150 |
| **10** | TPU 4 | 100 | 60 | B | 25 | 150 |
| **12** | TPU 2 | 50 | 87 | B | 50 | 150 |
| **13** | TPU 2 | 50 | 87 | B | 15 | 80 |
| **14** | PUD 1 | 30 | | A | 60 | 150 |
| **15** | PUD 1 | 100 | | A | 25 | 150 |
| **16** | PUD 1 | 30 | | B | 60 | 150 |
| **17** | PUD 1 | 100 | | B | 25 | 150 |
| **18** | PUD 2 | 30 | | A | 60 | 150 |
| **19** | PUD 3 | 50 | | B | 50 | 150 |
| **20** | PUD 4 | 50 | | A | 50 | 150 |
| **21** | PUD 4 | 50 | | B | 50 | 150 |
| **22** | PUD 4 | 50 | | B | 15 | 80 |
| **23** | PUD 4 | 50 | | D | 50 | 150 |
| **24** | PUD 4 | 50 | | D | 15 | 80 |
| **25** | PUD 4 | 50 | | E | 50 | 150 |
| **26** | PUD 4 | 50 | | E | 15 | 80 |

Die Herstellung der einzelnen Klebebänder wurde folgendermaßen durchgeführt:

Herstellung der Klebebänder mit TPU-Kernschichten TPU 2 - TPU 4 (Beispiele 6 bis 13):

Alle Granulate von thermoplastischem Polyurethan, d.h. TPU-Granulate, werden vor der Verarbeitung bei 80 °C für mindestens 3 Stunden in einem Granulattrockner (Somos) vorgetrocknet. Die Granulate werden über einen einfachen Vorlagebehälter/ Trichter über die Einzugszone dem Einschneckenextruder (Collin, 25D), nachfolgend ESE genannt, zugeführt. Die Temperierung des ESE erfolgt entsprechend der optimalen Verarbeitungstemperatur des jeweiligen TPU-Granulates. Nach Aufschmelzen des Granulats wird das Extrudat über einen Schlauch in einen Feedblock und anschließend in die Breitschlitzdüse überführt. Tabelle 5 zeigt die Temperierung des ESE inklusive der Breitschlitzdüse.

Tabelle 5: Temperierung des ESE inklusive der Breitschlitzdüse.

| | Extruder und B reitschlitzd üse | | | | | | | | | | |
|---|---|---|---|---|---|---|---|---|---|---|---|
| | Heizzonen | | | | | | | | | | |
| | Einzug | Einschneckenextruder | | | | | | Drehzahl | Schlauch | Feedblock | Düse |
| | Zone 1 | 2 | 3 | 4 | 5 | 6 | 7 | n | 8 | 9 | 10 |
| | [°C] | [°C] | [°C] | [°C] | [°C] | [°C] | [°C] | [U/min]* | [°C] | [°C] | [°C] |
| TPU 2 | 30 | 165 | 175 | 180 | 180 | 190 | 190 | 15 | 200 | 210 | 210 |
| TPU 3 | 30 | 165 | 175 | 180 | 180 | 190 | 190 | 15 | 190 | 200 | 200 |
| TPU 4 | 30 | 165 | 175 | 180 | 180 | 190 | 190 | 14 | 190 | 200 | 200 |
| *U/min = Umdrehungen pro Minute. | | | | | | | | | | | |

Der vorausgeformte Schmelzefilm wird nun auf eine Stahlwalze abgelegt. Da die TPU-Varianten mit geringerer Shore-Härte etwas haftklebriger sind und sich somit schlechter von der Stahlwalze wieder ablösen lassen, hat es sich bewährt, direkt auf einen PET-Träger mit Releasefunktion, d.h. temporären Träger bzw. Liner, zu beschichten, welcher über einen Abwickler und über die damit halb umschlungene Abnahmewalze zugeführt und anschließend aufgewickelt wird. Die hergestellten TPU-Träger (TPU-Kernschichten) sind frei von Prozesshilfsmitteln und weisen keine kristalline Überstruktur auf.

Nach Einstellen der gewünschten Schichtdicke wird am Abwickler der Ballen mit dem PET-Träger mit Releasefunktion gegen die vorgefertigte Funktionsschicht, d.h. die Haftklebemasseschicht A oder B ausgetauscht. Auf diese Weise wird direkt auf die Funktionsschicht beschichtet. Über einen weiteren Abwickler wird die zweite vorgefertigte Funktionsschicht (Haftklebemasseschicht A oder B), die die gleiche Dicke aufweist wie die erste Haftklebemasseschicht, über die Führungswalze bzw. Andruckwalze auf die offene, oben liegende TPU-Schicht kaschiert. Die Mikroballons liegen in den Haftklebemasseschichten A noch unexpandiert vor, d.h. die Haftklebemasseschichten A sind noch nicht geschäumt. Die Haftklebemasseschichten B enthalten keine Mikroballons. Die genannten Haftklebemasseschichten A (enthaltend unexpandierte Mikroballons) und B werden in den (Vergleichs-)Beispielen folgendermaßen hergestellt:
Zuerst wird eine 40 gew.-%ige Klebelösung des Elastomerteils, Harzteils, optional Weichharzteils und Additivs in Benzin/Toluol/Aceton hergestellt. Die Lösung wird anschließend optional, d.h. je nach herzustellender Haftklebemasseschicht, mit den Mikroballons versetzt, wobei die Mikroballons als Anschlämmung in Benzin eingesetzt werden. Die erhaltene Mischung wird dann mit einem Streichbalken auf einen PET-Liner, ausgerüstet mit einem trennenden Silikon, in der gewünschten Schichtdicke ausgestrichen, anschließend wird bei 100 °C für 15 min das Lösungsmittel abgedampft und so die Masseschicht getrocknet. Falls vorhanden, liegen darin die Mikroballons noch unexpandiert vor, d.h. die entsprechende Haftklebemasseschicht ist noch nicht geschäumt.

Das dreischichtige Produkt wird nun aufgewickelt. Der Gesamtverbund aus Träger und Haftklebemasseschichten wird zur besseren Verankerung und, falls die Haftklebemasseschichten unexpandierte Mikroballons enthalten, zur Schäumung der Haftklebemasseschichten einem weiteren Temperierungsschritt unterzogen. Das aufgewickelte Material wird dazu bei einem Temperaturprofil mit drei Zonen von 120°C/135°C/170°C, bei einer Bahngeschwindigkeit von 6m/min, durch eine Kanalanlage gefahren und anschließend wieder aufgewickelt. Es ergeben sich die doppelseitigen Klebebänder mit den TPU-Kernschichten TPU 2 - TPU 4.

<u>Herstellung der Klebebänder mit TPU-Kernschicht TPU 1 (Vergleichsbeispiele 1 und 3 bis 5):</u>

Die zugekauften Prozesshilfsmittel-haltigen TPU-Kernschichten TPU 1 (in verschiedenen Dicken) werden beidseitig mit den Haftklebemasseschichten A bzw. C kaschiert. Vor der Laminierung der TPU-Kernschichten TPU 1 mit den Haftklebemasseschichten wird jeweils der PE-Stützträger von der TPU-Kernschicht abgezogen. Die Haftklebemasseschichten weisen auf den beiden Seiten des Trägers die gleiche Dicke auf. Die Mikroballons liegen in den Haftklebemasseschichten A bzw. C noch unexpandiert vor, d.h. die Haftklebemasseschichten A bzw. C sind noch nicht geschäumt. Die Haftklebemasseschichten C werden analog hergestellt wie vorstehend für die Haftklebemasseschichten A und B beschrieben.

Der Gesamtverbund aus Träger und Haftklebemasseschichten wird jeweils zur besseren Verankerung und Schäumung der Haftklebemasseschichten einem weiteren Temperierungsschritt unterzogen. Das aufgewickelte Material wird dazu bei einem Temperaturprofil mit drei Zonen von 120°C/135°C/170°C, bei einer Bahngeschwindigkeit von 6m/min, durch eine Kanalanlage gefahren und anschließend wieder aufgewickelt. Es ergibt sich jeweils ein geschäumtes doppelseitiges Klebeband mit einer TPU-Kernschicht TPU 1.

Herstellung des Klebebands mit SBC-Kernschicht (Vergleichsbeispiel 2):

Die Herstellung der SBC-Kernschicht erfolgt analog der Herstellung der Haftklebemasseschichten wie vorstehend beschrieben. Die SBC-Kernschicht wird beidseitig mit einer Haftklebemasseschicht A gleicher Dicke kaschiert. Die Mikroballons liegen in den Haftklebemasseschichten A noch unexpandiert vor, d.h. die Haftklebemasseschichten A sind noch nicht geschäumt.

Der Gesamtverbund aus Träger und Haftklebemasseschichten wird zur besseren Verankerung und Schäumung der Haftklebemasseschichten einem weiteren Temperierungsschritt unterzogen. Das aufgewickelte Material wird dazu bei einem Temperaturprofil mit drei Zonen von 120°C/135°C/170°C, bei einer Bahngeschwindigkeit von 6m/min, durch eine Kanalanlage gefahren und anschließend wieder aufgewickelt. Es ergibt sich ein geschäumtes doppelseitiges Klebeband mit einer SBC-Kernschicht.

Herstellung der Klebebänder mit PUD-Kernschichten PUD 1 bis PUD 4 (Beispiele 14 bis 26):

Falls ein Verdicker eingesetzt wird, erfolgt die Abmischung der Polyurethan-Dispersion (PU-Dispersion, PUD) mit dem Verdicker über eine herkömmliche vertikale Rührapparatur mit einem Visco Jet-Rührer. Die Polyurethan-Dispersion wird in diesem Fall in einem ausreichend großen Behälter vorgelegt und vorsichtig gerührt. Eine Bildung von Tromben oder jegliches Einrühren von Luft soll im gesamten Abmischprozess vermieden werden. Falls eingesetzt, wird der Verdicker Ortegol PV301 (25 Gew.-% Feststoffgehalt) bzw. der Verdicker BorchiGel 0625 (33 Gew.-% Feststoffgehalt) im Verhältnis 1:2 mit Wasser vorverdünnt und anschließend der vorgelegten Polyurethan-Dispersion unter stetigem Rühren portionsweise zugeführt. Um eine homogene Mischung zu erhalten, wird eine Rührdauer von mind. 30 Minuten eingehalten. Die so angesetzte, angedickte Polyurethan-Dispersion wird optimalerweise einen Tag vor der Beschichtung hergestellt. Eingerührte Luftbläschen können somit noch entweichen. Nun können die abgemischten Polyurethan-Dispersionen (bzw. Polyurethan-Dispersionen ohne zugesetzten Verdicker) über eine Beschichtungsanlage, d.h. ein Auftragswerk, mit Trockenkanal beschichtet werden. Tabelle 7 zeigt relevante Parameter der Beschichtungsanlage und des Trockenkanals. Die hergestellten PUD-Kernschichten sind (abgesehen von Tensid) frei von Prozesshilfsmitteln und weisen keine kristalline Überstruktur auf.

Tabelle 7 zeigt relevante Parameter der Beschichtungsanlage und des Trockenkanals.

| | Auftragswerk | | | | | Trockenkanal | | |
|---|---|---|---|---|---|---|---|---|
| | Schlauch [°C] | Beschichtungs-walze [°C] | Rakel | Spalt [μm] | v [m/min] | Heizzone 1 [°C] | 2 [°C] | 3 [°C] |
| PUD 1 | 20 | 20 | Komma | 105-300 | 1,0 - 2,5 | 80 | 100 | 110 |
| PUD 2 | 20 | 20 | Komma | 105 | 2,5 | 80 | 100 | 110 |
| PUD 3 | 20 | 20 | Komma | 155 | 2,00 | 80 | 100 | 110 |
| PUD 4 | 20 | 20 | Komma | 135 | 2,00 | 80 | 100 | 110 |

Über 2 Abwickler wird entweder ein PET-Träger mit Releasefunktion oder eine vorgefertigte Funktionsschicht, d.h. Haftklebemasseschicht, auf PET-Träger mit Releasefunktion bereitgestellt. Es hat sich bewährt, die gewünschte Schichtdicke auf PET-Träger einzustellen und dann auf die vorgefertigte Funktionsschicht (Haftklebemasseschicht A, B, D oder E) zu wechseln und direkt zu beschichten. Vor der Aufwicklung wird dann über eine regelbare Andruckwalze die zweite Funktionsschicht (Haftklebemasseschicht A, B, D oder E), die die gleiche Dicke aufweist wie die erste Haftklebemasseschicht, dazu kaschiert. Die Mikroballons liegen in den Haftklebemasseschichten A und D noch unexpandiert vor, d.h. die Haftklebemasseschichten A und D sind noch nicht geschäumt. Die Haftklebemasseschichten B und E enthalten keine Mikroballons. Die Haftklebemasseschichten D und E werden analog hergestellt wie vorstehend für die Haftklebemasseschichten A und B beschrieben.

Das so hergestellte Dreischicht-Produkt wird nun aufgewickelt. Der Gesamtverbund aus PU-Träger und Haftklebemasseschichten wird zur Optimierung der Zugfestigkeit des Trägers, zur besseren Verankerung und, falls die Haftklebemasseschichten unexpandierte Mikroballons enthalten, zur Schäumung der Haftklebemasseschichten einem weiteren Temperierungsschritt unterzogen. Das aufgewickelte Material wird dazu bei einem Temperaturprofil mit drei Zonen von 120°C/135°C/170°C, bei einer Bahngeschwindigkeit von 6m/min, durch die gleiche Kanalanlage gefahren und anschließend wieder aufgewickelt. Es ergeben sich die doppelseitigen Klebebänder mit den PUD-Kernschichten PUD 1 bis PUD 4.

Ergebnisse:

Tabelle 8 zeigt die mechanischen Eigenschaften der hergestellten Klebebänder sowie der darin enthaltenen Träger.

| Bsp. | Träger | | | | | Klebeband | | | | |
|---|---|---|---|---|---|---|---|---|---|---|
| | $F_{400\%}$ [N/cm] | $F_{400\%}$ [N/mm$^2$] | $F_{Bruch}$ [N/cm] | $F_{Bruch}$ [N/mm$^2$] | $F_{400\%}$: $F_{Bruch}$ [%] | Fstripp 90° [N/cm] | $F_{Bruch}$ [N/cm] | $F_{Stripp}$: $F_{Bruch}$ [%] | Reißer 90° [%] | DuPont z [mJ] |
| **1** (Vgl.) | 7,0 | 23,3 | 13,2 | 44,0 | 53 | 12,5 | 20,3 | 62 | n.b.* | 694 |
| **2** (Vgl.) | 1,0 | 1,0 | 8,2 | 8,2 | 12 | 8,0 | 9,7 | 82 | n.b.* | 770 |
| **3** (Vgl.) | 7,0 | 23,3 | 13,2 | 44,0 | 53 | 12,0 | 13,7 | 88 | n.b.* | 883 |
| **4** (Vgl.) | 10,2 | 20,4 | 17,0 | 34,0 | 60 | 15,0 | 16,9 | 89 | n.b.* | 554 |
| **5** (Vgl.) | 20,4 | 20,4 | 42,3 | 42,3 | 48 | 26,0 | 42,8 | 61 | bestanden | 346 |
| **6** | 9,2 | 9,2 | 22,5 | 22,5 | 41 | 10,0 | 24,4 | 41 | bestanden | 433 |
| **7** | 6,2 | 6,2 | 40,0 | 40,0 | 16 | 8,0 | 32,3 | 25 | bestanden | 486 |
| **8** | 1,9 | 6,3 | 10,3 | 34,3 | 18 | 10,0 | 22,1 | 45 | bestanden | 735 |
| **9** | 3,3 | 6,6 | 25,6 | 51,2 | 13 | 11,0 | 27,9 | 39 | bestanden | 710 |
| **10** | 6,2 | 6,2 | 40,0 | 40,0 | 16 | 13,0 | 43,4 | 30 | bestanden | 368 |
| **12** | 9,8 | 19,6 | 25,3 | 50,6 | 39 | 15,0 | 40,1 | 37 | bestanden | 640 |
| **13** | 9,8 | 19,6 | 25,3 | 50,6 | 39 | 15,0 | 38,9 | 39 | bestanden | 338 |
| **14** | 1,1 | 3,7 | 7,5 | 25,0 | 15 | 7,0 | 19,0 | 37 | bestanden | 853 |
| **15** | 2,5 | 2,5 | 20,8 | 20,8 | 12 | 8,0 | 32,7 | 24 | bestanden | 427 |
| **16** | 1,1 | 3,7 | 7,5 | 25,0 | 15 | 7,5 | 17,2 | 44 | bestanden | 824 |
| **17** | 2,5 | 2,5 | 20,8 | 20,8 | 12 | 8,5 | 31,4 | 27 | bestanden | 420 |
| **18** | 1,1 | 3,7 | 10,0 | 33,3 | 11 | 7,0 | 13,2 | 53 | bestanden | 515 |
| **19** | 1,7 | 3,4 | 8,6 | 17,2 | 20 | 7,0 | 18,3 | 38 | bestanden | 611 |
| **20** | 1,8 | 3,6 | 12,6 | 25,2 | 14 | 11,0 | 23,6 | 47 | bestanden | 640 |
| **21** | 1,8 | 3,6 | 12,6 | 25,2 | 14 | 10,0 | 25,2 | 40 | bestanden | 590 |
| **22** | 1,8 | 3,6 | 12,6 | 25,2 | 14 | 7,0 | 19,5 | 36 | bestanden | 258 |
| **23** | 1,8 | 3,6 | 12,6 | 25,2 | 14 | 9,0 | 19,9 | 45 | bestanden | 824 |
| **24** | 1,8 | 3,6 | 12,6 | 25,2 | 14 | 6,0 | 19,3 | 31 | bestanden | 265 |
| **25** | 1,8 | 3,6 | 12,6 | 25,2 | 14 | 5,0 | 22,9 | 22 | bestanden | 765 |
| **26** | 1,8 | 3,6 | 12,6 | 25,2 | 14 | 4,0 | 20,0 | 20 | bestanden | 294 |

*n.b.: nicht bestanden.

Vergleichsbeispiel 2:

Beim Klebeband mit SBC-Träger, d.h. mit Träger auf Basis von Styrolblockcopolymer, besteht wie Vergleichsbeispiel 2 zeigt hinsichtlich der Bruchkraft des Klebebands weiterer Verbesserungsbedarf, insbesondere um das Verhältnis von Stripp- zu Bruchkraft und die Reißerbeständigkeit weiter zu verbessern.

Vergleichsbeispiele 1, 3 - 5:

Um die Reißerbeständigkeit eines Klebebands weiter zu verbessern, wurde ausgehend von Vergleichsbeispiel 3 die Dicke der verwendeten Trägerschicht erhöht (bzw. ist in Vergleichsbeispiel 1 konstant, wobei dort lediglich die Haftklebemasseschicht anders zusammengesetzt ist). Die Klebebänder der genannten Vergleichsbeispiele umfassen alle den Träger (Kern) TPU1 (TPU steht in der Anmeldung für thermoplastisches Polymer) mit einer Shore-Härte A von 86, aber in unterschiedlichen Schichtstärken. Erhöht man bei gleichbleibender Produktdicke von 150 µm nur die Kerndicke, verbessert sich zwar das Verhältnis von Stripp- zu Bruchkraft vorteilhaft und die Reißerbeständigkeit nimmt zu, aber gleichzeitig steigt die Strippkraft sehr stark an, so dass eine Beschädigung der zu trennenden Materialien hervorgerufen wird und sich die Schock-Eigenschaften (DuPont z) verschlechtern. Hinsichtlich der Ausgewogenheit der Produkt-Performance besteht somit Verbesserungsbedarf.

Beispiele 6-13:

Um in den Klebebändern mit TPU-Kern eine verbesserte Reißerbeständigkeit des Klebebands zu erzielen und gleichzeitig die Strippkraft des Klebebands zu verringern, bedarf es überraschenderweise eines TPU-Kerns mit einer Shore-Härte A von höchstens 87. Kommerziell sind PU-Folien ohne Zusatz von Prozesshilfsmitteln, wie z.B. Gleitmitteln, Wachsen und/oder Antiblockmitteln nicht erhältlich. Deshalb wurde ein erfindungsgemäßes Verfahren zur Herstellung von PU-Schichten mit einer Shore-Härte A von höchstens 87 entwickelt, die als Träger für ein mehrlagiges durch dehnendes Verstrecken bequem wiederablösbares, d.h. strippbares Produkt dienen und die Reißerbeständigkeit nochmals deutlich verbessern. Gegenüber den Vergleichsbeispielen verringert sich mit sinkender Shore-Härte A das Verhältnis von Stripp- zu Bruchkraft, die Reißerbeständigkeit verbessert sich deutlich und die Strippkraft sinkt soweit, dass ein zerstörungsfreies Ablösen bzw. Trennen der Bauteile gewährleitet ist. In allen Beispielen wiesen die Klebebänder im Reißertest keine Reißer auf.

Beispiele 14-26:

Die erfindungsgemäße Verwendung von Kernschichten (Trägern) auf Basis von PU-Dispersionen, d.h. PUD-Trägern, hat sich als besonders vorteilhaft herausgestellt, da sich hier das Verhältnis von Stripp- zu Bruchkraft gegenüber den Vergleichsbeispielen deutlich reduziert, was wiederum zu einer sehr guten Reißerbeständigkeit führt. Die Strippkräfte sind gleichzeitig auf einem sehr geringen Niveau, so dass eine Zerstörung der zu trennenden Bausteile auszuschließen ist. In allen Beispielen wiesen die Klebebänder im Reißertest keine Reißer auf.

*Prüfmethoden*

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

*Reißertest mittels Zugprüfmaschine, Zwick*

Im Reißertest werden eine erste Prüfplatte aus Polyethylen und eine zweite Prüfplatte aus Stahl eingesetzt. Die erste Prüfplatte aus Polyethylen ist mit einem doppelseitigen Klebeband tesa® 67215 umwickelt worden, auf das anschließend eine "Batteriefolie" aufgebracht worden ist. Das Klebeband tesa® 67215 ist insgesamt 150 µm dick und enthält einen 30 µm dicke Polyurethanträger, auf dem beidseitig jeweils eine 60 µm dicke geschäumte Haftklebemasseschicht auf Basis von Vinylaromatenblockcopolymer angeordnet ist. Bei der "Batteriefolie" handelt es sich um eine mit Aluminium laminierte Polymerfolie einer Dicke von 88 µm des Herstellers DNP - die Folie wird typischerweise zur Herstellung von Lithium-Polymer-Batterien eingesetzt.

Aus dem zu untersuchenden Klebeband werden Prüflinge mit 8 mm Breite und 60 mm Länge gestanzt oder gelasert. Diese Prüflinge werden auf einer Länge von 50 mm auf die wie vorstehend beschrieben mit Batteriefolie umwickelte erste Prüfplatte aus Polyethylen geklebt, so dass ein 10 mm langer Anfasser übersteht. Der Anfasser wird beidseitig mit 36 µm PET eingedeckt. Die zweite Prüfplatte aus Stahl wird, nach einer Reinigung mit Aceton und Vorkonditionierung für 1 bis höchstens 10 min bei 23 °C und 50 % relativer Luftfeuchtigkeit, derart auf die Gegenseite des

verklebten Streifens (d.h. Prüflings) geklebt, dass die beiden Prüfplatten bündig, d.h. deckungsgleich, übereinander liegen. Der Verbund wird rückseitig über die Stahlplatte mit einer 4 kg Rolle 10-fach überrollt (jeweils fünfmal hin und zurück). Nach mindestens 4 h Aufziehzeit bei 23 °C und 50 % relativer Luftfeuchtigkeit werden die Streifen am Anfasser mittels einer Zugprüfmaschine (der Firma Zwick) bei einer konstanten Geschwindigkeit von 800 mm/min in einem Winkel von 90° über die Kante der mit Batteriefolie umwickelten ersten Prüfplatte aus Polyethylen aus der Klebefuge gestrippt. Der Probenkörper wird dabei mit einem winkelverstellbaren Adapter fixiert und der Anfasser wird senkrecht in die Mitte der Klemmbacken eingespannt.

Es wird bei einem Winkel von 90° gemessen und es wird währenddessen die Kraft, die zum Herauslösen / Strippen der Probe kontinuierlich benötigt wird, durch die Zugprüfmaschine aufgenommen - die sogenannte Strippkraft $F_{Stripp}$.Die Messung ist beendet, sobald die Probe komplett zwischen den beiden Prüfplatten herausgestrippt wurde oder die Probe während der Messung gerissen ist. Es werden mindestens 6 Messungen pro Muster durchgeführt. Das Prüfklima beträgt 23 °C und 50 % rel. Luftfeuchtigkeit.

Angabe der Ergebnisse:

Reißer 90° - der Test gilt als bestanden, wenn während des Strippvorgangs weniger als 20% der Prüflinge reißen.

$F_{Stripp}$ 90° [N/cm] - benötigte Kraft, um den Prüfling aus der Klebefuge zu strippen bei Winkel 90° (Strippkraft)

Figur 2 zeigt den Reißertest mittels Zugprüfmaschine. Darin haben die Bezugszeichen die folgende Bedeutung:

21: Anfasser, beidseitig mit 36 μm PET verstärkt
22: zu testendes Klebeband
23: miteinander verklebte Prüfplatten (Testsubstrate)
25: Winkelverstellbarer Adapter zur Fixierung des Probenkörpers
26: Vorrichtung zum Verstellen des Messwinkels, 0 - 90°

*Zugversuch mittels Zugprüfmaschine, Zwick*

Aus der zu untersuchenden Probe (Klebeband, d.h. vorzugsweise beidseitig mit Klebmasse ausgerüsteter Träger, oder nur Rohträger) werden in Längsrichtung mittels Streifenschneider oder Rasierklingenmesser 15 mm breite Streifen mit einer Länge von ca. 150 mm geschnitten. Die im Prüfklima 24h vorkonditionierte Probe wird senkrecht in die Mitte der Klemmbacken mit einer Einspannlänge von 10 mm eingespannt und solange mit einer Geschwindigkeit von 800 mm/min gedehnt, bis er reißt. Der Riss soll etwas in der Mitte des Streifens erfolgen. Erfolgt der Riss in Backennähe (näher als 1cm), so ist der Wert zu verwerfen und dafür ein weiterer Streifen zu prüfen. Pro Probenvariante werden 5 Messungen durchgeführt. Das Prüfklima beträgt 23 °C und 50 % rel. Luftfeuchtigkeit. Die Messungen erfolgen in Anlehnung an die EN ISO 527.

Angabe der Ergebnisse:

$F_{x\%}$ [N/cm], [N/mm$^2$] - Kraft bei x % Dehnung

$F_{Bruch}$ [N/cm], [N/mm$^2$] - Kraft bei Riss/ Bruch der Probe (d.h. Reißfestigkeit)

RD [%] - Reißdehnung, d.h. prozentuale Dehnung bei Riss/ Bruch der Probe

*Durchschlagzähigkeit, d.h. DuPont-Test in z-Ebene*

Aus dem zu untersuchenden Klebeband wird eine quadratische, rahmenförmige Probe ausgeschnitten (Außenmaße 33 mm × 33 mm, Stegbreite 2,0 mm, Innenmaße (Fensterausschnitt) 29 mm × 29 mm). Diese Probe wird auf einen Polycarbonat-(PC)-Rahmen (Außenmaße 45 mm × 45 mm, Stegbreite 10 mm, Innenmaße (Fensterausschnitt) 25 mm × 25 mm; Dicke 3 mm) geklebt. Auf der anderen Seite des doppelseitigen Klebebands wird ein PC-Fenster von 35 mm × 35 mm geklebt. Die Verklebung von PC-Rahmen, Klebebandrahmen und PC-Fenster erfolgt derart, dass die geometrischen Zentren und die Diagonalen jeweils übereinanderliegen (Eck-auf-Eck). Die Verklebungsfläche beträgt 248 mm$^2$. Die Verklebung wird für 5 s mit 248 N gepresst und für 24 Stunden konditioniert bei 23 °C / 50 % relativer Feuchte gelagert.

Unmittelbar nach der Lagerung wird der Klebeverbund aus PC-Rahmen, Klebeband und PC-Fenster mit den überstehenden Kanten des PC-Rahmens derart in eine Probenhalterung gespannt, dass der Verbund waagerecht ausgerichtet ist. Dabei liegt der PC-Rahmen an den überstehenden Kanten auf der Probenhalterungen plan auf, so dass das PC-Fenster unterhalb des PC-Rahmens frei schwebend (durch das Klebebandmuster gehalten) vorliegt. Die Probenhalterung wird anschließend in die vorgesehene Aufnahme des "DuPont Impact Tester" zentrisch eingesetzt. Der 150 g schwere Schlagkopf wird so eingesetzt, dass die kreisförmige Aufschlaggeometrie mit dem Durchmesser 24 mm auf die von oben frei zugängliche Fläche des PC-Fensters zentrisch und bündig aufliegt.

Auf den so angeordneten Verbund aus Probenhalterung, Probe und Schlagkopf wird senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wird in 5 cm Schritten so lange erhöht, bis die eingebrachte Stoßenergie die Probe durch die Durchschlagbelastung zerstört und das PC-Fenster sich vom PC-Rahmen löst.

Um Versuche mit unterschiedlichen Proben vergleichen zu können, wird die Energie wie folgt berechnet:

$$\text{Energie E [J]} = \text{Höhe [m]} * \text{Masse Gewicht [kg]} * 9{,}81\ \text{kg/m} * \text{s}^2$$

Es werden fünf Proben pro Produkt getestet und der Energiemittelwert als Kennzahl für die Durchschlagzähigkeit angegeben.

*Shore-Härte A*

Die Shore-Härte A einer Probe wird gemäß ASTM D2240 ermittelt.

*Modul bei 100% Dehnung, Reißdehnung*

Das Modul bei 100% Dehnung bzw. die Reißdehnung einer Probe werden gemäß DIN 53504 ermittelt.

*Dicke*

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Dichte*

Die Dichte der ungeschäumten und der geschäumten Klebemasseschichten wird ermittelt durch Quotientenbildung aus Masseauftrag und Dicke der auf einen Liner aufgetragenen Klebemassenschicht.

Der Masseauftrag kann durch Bestimmung der Masse eines bezüglich seiner Länge und seiner Breite definierten Abschnitts einer solchen auf einen Liner aufgetragenen Klebemassenschicht bestimmt werden, abzüglich der (bekannten oder separat ermittelbaren) Masse eines Abschnitts gleicher Dimensionen des verwendeten Liners.

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Die Dichte eines Trägers lässt sich analog bestimmen.

*Statische Glasübergangstemperatur $T_g$*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

*Molekulargewicht $M_n$, $M_w$*

Die Angaben des zahlenmittleren Molekulargewichts $M_n$ bzw. gewichtsmittleren Molekulargewichts $M_w$ in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, $10^3$ Å, 8,0 mm * 50 mm (Angaben hier und im Folgenden in der Reihenfolge: Typ, Partikelgrösse, Porosität, mInnendurchmesser * Länge; 1 Å = $10^{-10}$ m) verwendet. Zur Auftrennung wird eine Kombination der Säulen des Typs PSS-SDV, 5 µm, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans gegen PMMA-Standards (Polymethylmethacrylat-Kalibrierung) und sonst gegen PS-Standards (Polystyrol-Kalibrierung).

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

*DACP*

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

**Patentansprüche**

1. Klebeband einer Dicke von 40 bis 300 µm, das sich durch dehnendes Verstrecken im Wesentlichen in der Verklebungsebene rückstands- und zerstörungsfrei wieder ablösen lässt, umfassend

   mindestens einen Träger einer Dicke von 10 bis 150 µm, der mindestens eine typischerweise mittels Extrusion hergestellte Schicht auf Basis von, vorzugsweise unvernetztem, thermoplastischem Polyurethan enthält, die eine Shore-Härte A von höchstens 87 und insbesondere weniger als 70 aufweist, wobei der Träger ein Verhältnis der Kraft bei 400% Dehnung $F_{400\%}$ zur Bruchkraft $F_{Bruch}$ von höchstens 45%, vorzugsweise höchstens 40% aufweist,
   auf dem mindestens einseitig eine Haftklebemasseschicht angeordnet ist,
   wobei das Klebeband ein Verhältnis von Strippkraft $F_{Stripp}$ zu Bruchkraft $F_{Bruch}$ von weniger als 60 %, vorzugsweise weniger als 50 % aufweist.

2. Klebeband nach Anspruch 1, wobei das thermoplastische Polyurethan ein Reaktionsprodukt eines Gemisches ist, das mindestens ein Diisocyanat, mindestens ein Polyesterpolyol und gegebenenfalls mindestens einen Kettenverlängerer wie zum Beispiel Butandiol enthält.

3. Klebeband nach Anspruch 1 oder 2, wobei der Träger weniger als 0,3 Gew.-% Prozesshilfsmittel, wie zum Beispiel Gleitmittel, Wachse und/oder Antiblockmittel, enthält, vorzugsweise weniger als 0,1 Gew.-% Prozesshilfsmittel enthält, und insbesondere frei von Prozesshilfsmitteln ist.

**4.** Klebeband einer Dicke von 40 bis 300 μm, das sich durch dehnendes Verstrecken im Wesentlichen in der Verklebungsebene rückstands- und zerstörungsfrei wieder ablösen lässt, umfassend

mindestens einen Träger einer Dicke von 10 bis 150 μm, der mindestens eine Schicht auf Basis von, vorzugsweise unvernetztem, Polyurethan enthält, die aus einer Dispersion hergestellt worden ist und ein Modul bei 100% Dehnung von höchstens 1,8 MPa, vorzugsweise höchstens 1,5 MPa, aufweist, wobei der Träger ein Verhältnis der Kraft bei 400% Dehnung $F_{400\%}$ zur Bruchkraft $F_{Bruch}$ von höchstens 30%, vorzugsweise höchstens 20% aufweist,
auf dem mindestens einseitig eine Haftklebemasseschicht angeordnet ist,
wobei das Klebeband ein Verhältnis von Strippkraft $F_{Stripp}$ zu Bruchkraft $F_{Bruch}$ von weniger als 60 %, vorzugsweise weniger als 50 % aufweist.

**5.** Klebeband nach Anspruch 4, wobei das Polyurethan aliphatisches Polyester-Polyurethan oder aliphatisches Polyether-Polyurethan ist.

**6.** Klebeband nach einem der vorhergehenden Ansprüche, wobei der Träger eine Dicke von 20 bis 100 μm, bevorzugt von 30 bis 50 μm, aufweist.

**7.** Klebeband nach einem der vorhergehenden Ansprüche, wobei der Träger aus der mindestens einen Schicht auf Basis von Polyurethan besteht, und insbesondere aus genau einer solchen Schicht besteht.

**8.** Klebeband nach einem der vorhergehenden Ansprüche, wobei der Träger keine kristalline Überstruktur hat.

**9.** Klebeband nach einem der vorhergehenden Ansprüche, wobei der Träger geschäumt ist, insbesondere durch Mikroballons.

**10.** Klebeband nach einem der vorhergehenden Ansprüche, wobei auf dem Träger beidseitig jeweils eine Haftklebemasseschicht angeordnet ist, so dass das Klebeband ein doppelseitiges Klebeband ist.

**11.** Klebeband nach einem der vorhergehenden Ansprüche, wobei die mindestens eine Haftklebemasseschicht aus einer Haftklebemasse auf Basis von Vinylaromatenblockcopolymer, wie insbesondere Styrolblockcopolymer, besteht.

**12.** Klebeband nach einem der vorhergehenden Ansprüche, wobei die mindestens eine Haftklebemasseschicht geschäumt ist, insbesondere durch Mikroballons.

**13.** Klebeband nach einem der vorhergehenden Ansprüche, wobei das Klebeband eine Strippkraft $F_{Stripp}$ von weniger als 20 N/cm, vorzugsweise höchstens 15 N/cm, und insbesondere höchstens 10 N/cm aufweist.

**14.** Verfahren zur Herstellung eines Klebebands gemäß einem der Ansprüche 1 bis 3 oder 6 bis 13, bei dem ein Träger auf Basis von, vorzugsweise unvernetztem, thermoplastischem Polyurethan, der wie in einem der Ansprüche 1 bis 3 oder 6 bis 9 definiert ist,

(i) auf einen temporären Träger extrudiert wird und mindestens einseitig, vorzugsweise beidseitig, mit einer Haftklebemasse kombiniert wird, oder
(ii) auf eine Haftklebemasseschicht extrudiert wird, wobei vorzugsweise der Träger auf der der Haftklebemasseschicht gegenüber liegenden Seite mit einer weiteren Haftklebemasse kombiniert wird,

so dass sich ein Klebeband ergibt.

**15.** Verfahren zur Herstellung eines Klebebands gemäß einem der Ansprüche 4 bis 13, bei dem eine Dispersion auf Basis von, vorzugsweise unvernetztem, Polyurethan

(i) auf einen temporären Träger beschichtet und getrocknet wird und der sich ergebende wie in einem der Ansprüche 4 bis 9 definierte Träger mindestens einseitig, vorzugsweise beidseitig, mit einer Haftklebemasse kombiniert wird, oder
(ii) auf eine Haftklebemasseschicht beschichtet und getrocknet wird, so dass sich ein Träger ergibt, der wie in einem der Ansprüche 4 bis 9 definiert ist, wobei vorzugsweise der Träger auf der der Haftklebemasseschicht

gegenüber liegenden Seite mit einer weiteren Haftklebemasse kombiniert wird,

so dass sich ein Klebeband ergibt.

**16.** Verfahren nach Anspruch 14 oder 15, bei dem der Träger mit der Haftklebemasse kombiniert wird, indem der Träger mit einer Haftklebemasseschicht bestehend aus der Haftklebemasse kaschiert wird.

**17.** Verfahren nach einem der Ansprüche 14 bis 16, bei dem der Träger auf einen temporären Träger aufgebracht wird und anschließend mindestens einseitig, vorzugsweise beidseitig, mit einer Haftklebemasseschicht bestehend aus einer Haftklebemasse kaschiert wird.

**18.** Verfahren nach einem der Ansprüche 14 bis 16, bei dem der Träger auf eine Haftklebemasseschicht aufgebracht wird und gleichzeitig der Träger auf der der Haftklebemasseschicht gegenüber liegenden Seite mit einer weiteren Haftklebemasseschicht kombiniert wird.

**19.** Verfahren nach Anspruch 14 oder 15, bei dem der Träger mit der Haftklebemasse kombiniert wird, indem die Haftklebemasse direkt auf den Träger beschichtet wird, wobei die Haftklebemasse typischerweise

(a) als Lösung auf den Träger beschichtet und getrocknet wird, oder
(b) als plastische Schmelze auf den Träger extrudiert wird.

**20.** Verwendung eines Klebebands gemäß einem der Ansprüche 1 bis 13 zur Verklebung von Bauteilen in elektronischen Geräten.

Figur 1:

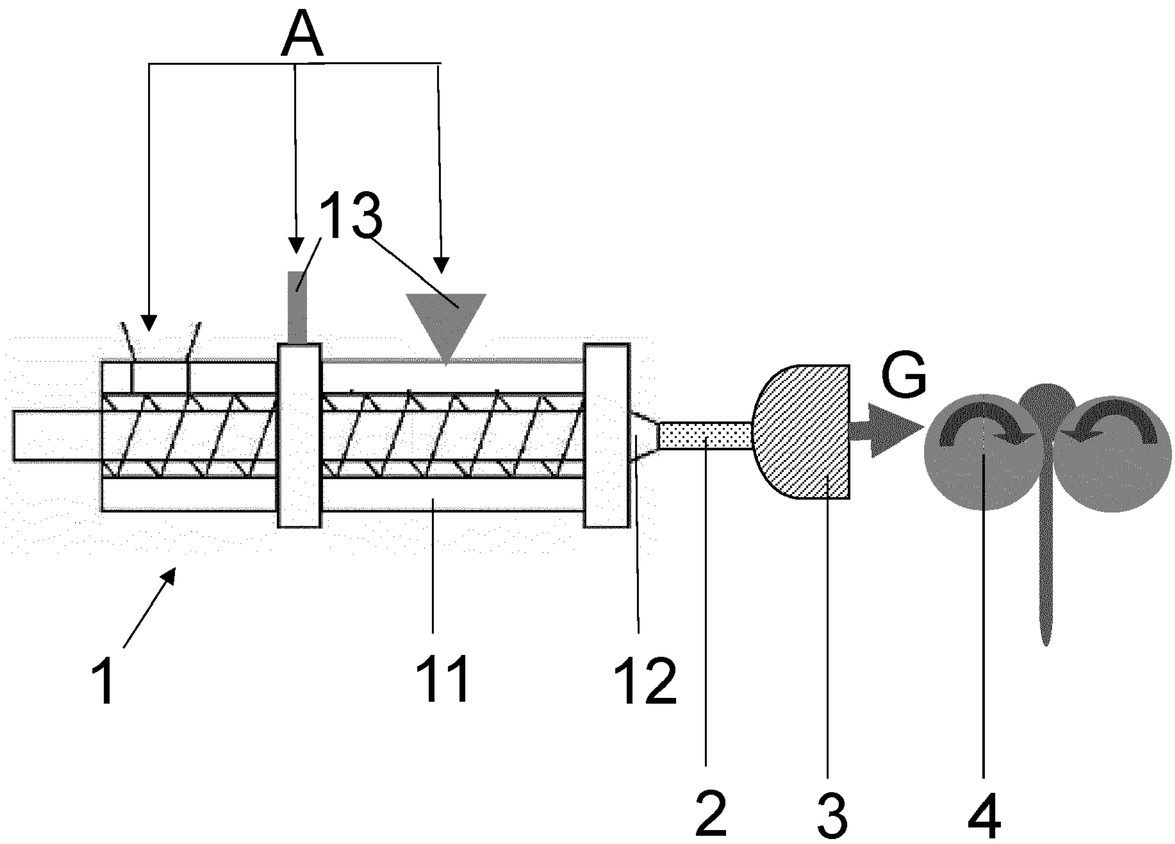

Figur 2:

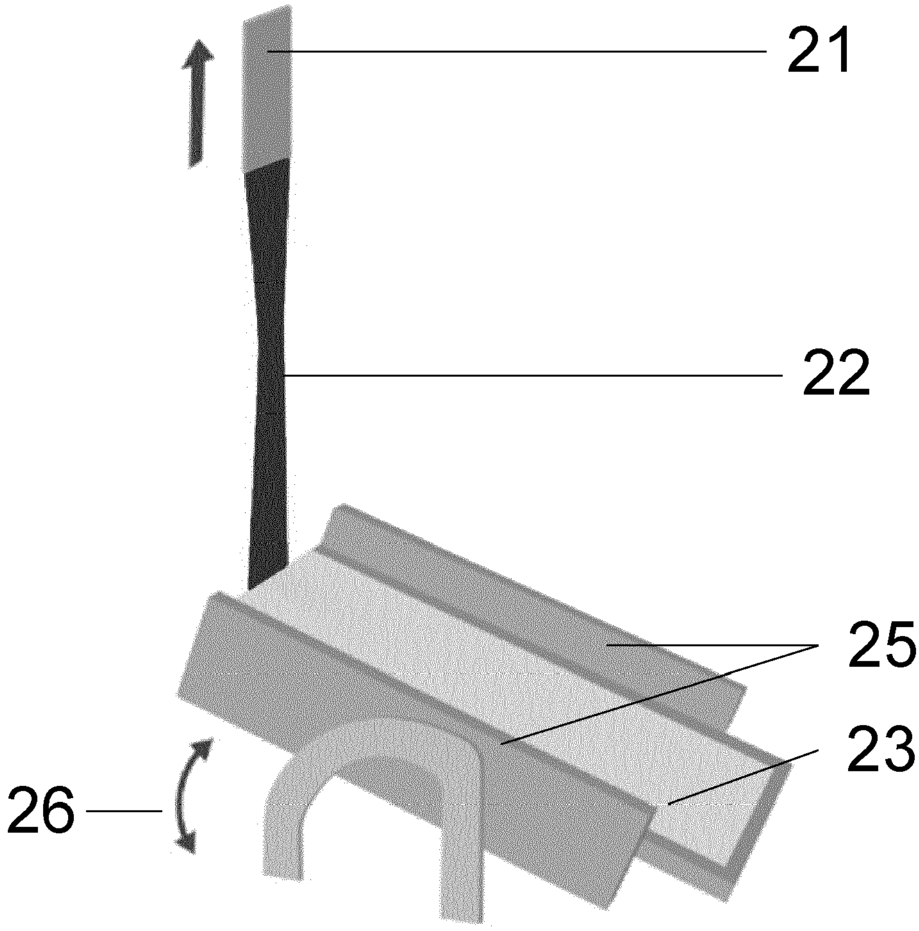

Europäisches Patentamt
European Patent Office
Office européen des brevets

# EUROPÄISCHER RECHERCHENBERICHT

Nummer der Anmeldung
EP 21 19 2046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2013 012788 U1 (TESA SE [DE]) 29. August 2019 (2019-08-29) * Absatz [0054]; Ansprüche 1-37; Beispiel 4 * ----- | 1-3,6-20 | INV. C09J7/25 C09J7/26 C09J7/38 |
| A | COVESTRO: "Product Information Platilon® UHighly Elastic Polyurethane Films", , 31. Januar 2020 (2020-01-31), XP002805056, Gefunden im Internet: URL:file:///C:/Users/PS22203/Downloads/1580477020.pdf [gefunden am 2021-12-14] * Seite 1 * ----- | 1-3,6-20 | |
| X,D | EP 3 623 400 A1 (TESA SE [DE]) 18. März 2020 (2020-03-18) * Absatz [0019]; Ansprüche 1-20; Beispiele 3,4,7 * ----- | 4-20 | |
| | | | RECHERCHIERTE SACHGEBIETE (IPC) |
| | | | C09J |

2

Der vorliegende Recherchenbericht wurde für alle Patentansprüche erstellt

| Recherchenort | Abschlußdatum der Recherche | Prüfer |
|---|---|---|
| München | 15. Dezember 2021 | Sperry, Pascal |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 19 2046

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2021

| Im Recherchenbericht angeführtes Patentdokument | Datum der Veröffentlichung | Mitglied(er) der Patentfamilie | Datum der Veröffentlichung |
|---|---|---|---|
| DE 202013012788 U1 | 29-08-2019 | KEINE | |
| EP 3623400 A1 | 18-03-2020 | CN 110903453 A | 24-03-2020 |
| | | DE 102018215651 A1 | 19-03-2020 |
| | | EP 3623400 A1 | 18-03-2020 |
| | | US 2020091472 A1 | 19-03-2020 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102012223670 A1
- DE 102015206076 A1
- EP 3075772 A1
- DE 102016224646 A1
- KR 101680827 B1
- US 2017121573 A1
- EP 3623400 A1
- WO 2015135134 A1
- WO 2020035761 A1

### In der Beschreibung aufgeführte Nicht-Patentliteratur

- *CHEMICAL ABSTRACTS,* 1330-20-7
- *CHEMICAL ABSTRACTS,* 123-42-2